Europäisches Patentamt

European Patent Office

Office européen des brevets

(19)

(11) **EP 0 834 414 A2**

(12) # EUROPEAN PATENT APPLICATION

(43) Date of publication:
**08.04.1998 Bulletin 1998/15**

(51) Int Cl.$^6$: **B60J 1/20**

(21) Application number: **97306313.4**

(22) Date of filing: **19.08.1997**

(84) Designated Contracting States:
**AT BE CH DE DK ES FI FR GB GR IE IT LI LU MC NL PT SE**
Designated Extension States:
**AL LT LV RO SI**

(30) Priority: **22.08.1996 JP 221564/96**
    **16.10.1996 JP 273761/96**
    **24.03.1997 JP 87323/97**
    **02.06.1997 JP 144335/97**

(71) Applicant: **NIPPON SHEET GLASS CO., LTD.**
**Osaka-shi, Osaka 541 (JP)**

(72) Inventors:
• **Yamamoto, Yasuo, Nippon Sheet Glass Co., Ltd.**
  **Osaka-shi, Osaka (JP)**
• **Yoshizawa, Hideo, Nippon Sheet Glass Co., Ltd.**
  **Osaka-shi, Osaka (JP)**

(74) Representative: **BATCHELLOR, KIRK & CO.**
**2 Pear Tree Court**
**Farringdon Road**
**London EC1R 0DS (GB)**

(54) **Curtain assembly for vehicle window and curtain unit used therein**

(57)    A curtain assembly includes a pair of parallel spaced guide rails (15, 16) directly attached by bonding to the inside surface of a vehicle window glass (12). By virtue of direct attachment of the guide rails (15, 16), the spacing between the window glass (12) and a curtain (20) can be reduced to a minimum. The guide rails may have a two-piece structure composed of two guide rail members relatively movably connected end to end with a space defined therebetween so that the differential thermal expansion between the guide rails and the window glass can be taken up. The curtain assembly may include a curtain unit particularly suitable for use with a curved window glass. The curtain unit includes a flexible tubular winding drum rotatably mounted a curved stationary shaft having substantially the same curvature as the curved window glass.

FIG.5

## Description

The present invention relates to improvements in a curtain assembly for vehicle windows and a curtain unit used therein.

Automobiles or railway vehicles equipped with curtains at their windows are known in which the curtains are used to shield the interior of the vehicle from the light coming through the window glass or to prevent a temperature rise inside the vehicle. A typical example of such known curtains is disclosed in Japanese Utility Model Publication No. HEI 4-27687, entitled "CURTAIN UNIT FOR CURVED WINDOW GLASS OF VEHICLE".

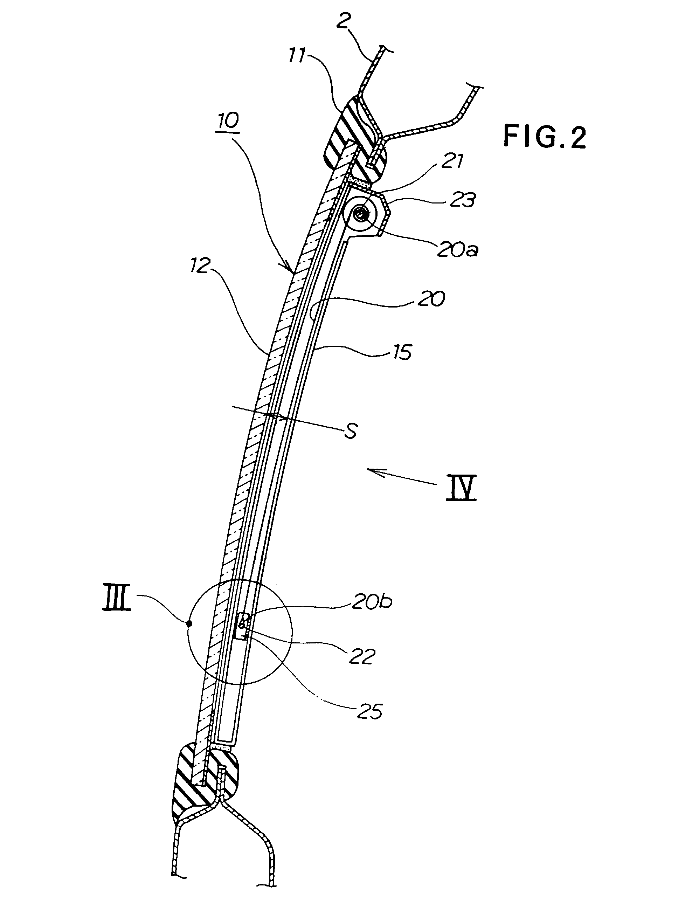

The disclosed curtain unit, as shown in FIG. 2 of the same Publication, includes a pair of guide rails attached to a vehicle body along opposite vertical sides of a window opening, and a curtain that can be opened and closed along the guide rails. The guide rails are attached to the vehicle body via brackets, and so they are spaced from the inside surface of the window glass by a distance at least equal to the height of the brackets. The curtain is connected at its lower end to a horizontal bar which in turn is slidably received in and guided along the guide rails. The upper end of the curtain is firmly connected to a winding shaft which is rotatably supported on a portion of the vehicle body located close to the upper ends of the guide rails.

When the curtain is to be closed, the horizontal bar is pulled downwards. As the horizontal bar move downwardly along the guide rails, the curtain is gradually unwound or released from the winding shaft. If a downward pull on the curtain is released, the winding shaft will start rotating in the wind-up direction to wind-up the curtain around the winding shaft and thus opens the curtain.

The guide rails are attached via the brackets to the vehicle body, as described above, and so, when the curtain is disposed in a closed position, the window glass and the curtain jointly define therebetween a relatively large space which is at least equal in amount to the height of the brackets. The space thus provided narrows the available vehicle interior space, correspondingly.

In addition, since the guide rails are attached to the vehicle body, the vehicle body is rendered complicated in construction and hence requires a relatively long time for assembly.

Another drawback associated with the conventional curtain unit is that since the window glass and the guide rails are formed from different materials, the guide rails may be deformed due to a difference in thermal expansion between the window glass and the guide rails.

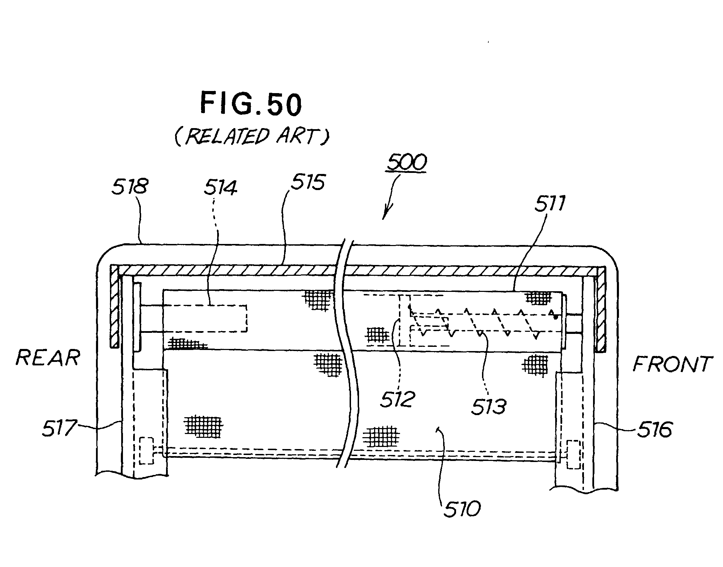

FIG. 50 of the accompanying drawings shows a curtain assembly for a vehicle window according to related art. The curtain assembly 500 is constructed such that when a curtain fabric 510 is pulled downwards, a winding drum 511 rotates in the unwinding or releasing direction, thereby allowing the curtain fabric 510 to be unwound or released from the winding drum 511. During that time, a rotating member 512 rotates in unison with the winding drum 511, thus causing a wind-up spring 513 to be distorted or twisted in the releasing direction. When a downward pulling force on the curtain fabric 510 is released, the distorted wind-up spring 513 is allowed to spring back and immediately restores its original shape. Accordingly, the rotating member 512 and the winding drum 511 are rotated in the wind-up direction by the force of the wind-up spring 513 with the result that the curtain fabric 510 is automatically wound up around the winding drum 511. The curtain assembly 500 also has a locking mechanism 514 so constructed as to lock the winding drum 511 in position against rotation and thus stop the curtain fabric 510 at a desired position.

The winding drum 511 is covered by a cover member 515 which is attached to upper end portions of front and rear guide rails 516, 517. The cover member 515 and the guide rails 516, 517 may be made of metal such as iron, aluminum alloy, or stainless steel, or molded from synthetic resin. The cover member 515 is susceptible to thermal deformation caused due to the differential thermal expansion between the window glass 518 and the cover member 515.

Some vehicles may have roll curtain units at their windows for the purpose of protecting the passenger's privacy and/or blocking or shielding the light.

The roll curtain units generally include a winding shaft disposed alongside an upper edge of the window glass for winding up a curtain fabric. In use of the roll curtain unit, a lower edge of the curtain fabric is pulled downwards to unwind the curtain fabric from the winding shaft to such a extent that the inside surface of the window glass is fully covered by the curtain fabric. The curtain fabric now shields the vehicle interior space from view taken from outside the vehicle and also shields from the light coming through the window glass.

Many vehicle window glasses are curved outwardly. In the case where the roll curtain unit described above is used in combination with an outwardly curved rear window glass of the type having a curvature in the horizontal direction and a second curvature in the vertical direction, a central portion of the roll curtain unit is greatly spaced from the inside surface of the rear window glass even though left and right end portions of the curtain unit are located close to the inside surface of the rear window glass. With this arrangement, when the curtain fabric is disposed in a closed position, the curtain fabric and the rear window glass jointly define therebetween a relatively large space. With the large space thus defined, light is now permitted to reach the vehicle interior space through a space defined between the inside surface of the rear window glass and each side edge of the curtain fabric. Thus, the curtain unit is now unable to perform the prescribed glare shield function. Due to the presence of the aforesaid large space, the vehicle interior space may be observed from outside the vehicle. This may cause violation of the passenger's privacy.

Since the vehicle interior space is reduced or narrowed by the large spacing between the rear window glass and the curtain fabric, the passenger may feel moral pressure originated from such narrowed interior space.

According to a first aspect of the present invention, there is provided a curtain assembly for a vehicle window, comprising: a window glass for the vehicle window, the window glass having an inside surface facing interiorly of the vehicle window; at least one guide rail attached substantially directly to the inside surface of the window glass; and a curtain capable of being opened and closed along the guide rail.

By virtue of the direct attachment of the guide rail to the inside surface of the window glass, it is possible to place the working plane of the curtain close to the window glass and thus enlarge the available vehicle interior space, correspondingly.

In the strict sense, the curtain assembly is a combined glass-and-curtain assembly of the class which can readily be assembled in a window-glass production line, for example. Use of such glass-and-curtain assembly will poses a considerable reduction in operation cycle time of the vehicle assembly line because a manual guide-rail-attaching operation conventionally performed inside the vehicle can be omitted.

The window glass, as assembled or united with the guide rail, has a greater rigidity than those used alone. The same is true of the guide rail. This means that by virtue of assembly or structural integration, it becomes possible to reduce the thickness of the window glass and simplify the design of the guide rail to such an effect as to cut down the amount of material used and the weight of the guide rails.

The guide rail, as attached directly to the inside surface of the window glass, serves as a means of reinforcing the rigidity of the window glass. The window glass, therefore, requires no separate reinforcement member. The reinforcing effect attainable by the guide rails is particularly useful in an application in which the window glass is a roof glass which is subjected to a relatively high wind pressure.

In the case where the window glass is a curved glass, a similarly curved guide rail is used to ensure that the curtain can be opened and closed along the curvature of the curved window glass.

The window glass may have a masking layer applied to its inside surface over a region to which the guide rail is to be applied. The masking layer thus provided serves to conceal the guide rail from view taken from outside the vehicle. In addition, an adhesive used to attach the guide rail to the window glass is protected by the making layer from deterioration by light.

The masking layer has a roughened outside surface coarser than the inside surface of the window glass and hence is able to improve the bonding strength of the adhesive to such an extent as to insure firm bonding between the window glass and the guide rail.

The spacing between the inside surface of the glass window and the inside surface of the curtain (facing interiorly of the vehicle) is set in the range of 3 - 20 mm. Since the working plane of the curtain is thus placed close to the window glass, more vehicle interior space can be used. In addition, the curtain is now able to shield the interior space from view taken from outside the vehicle and thus protect the passenger against violation of privacy.

The curtain may be a fabric curtain, a laced curtain, or an accordion curtain. The accordion curtain is particularly useful as it can be folded up without using a particular wind-up means or mechanism.

The curtain assembly of the present invention may be applied to a roof window in which instance a shutter is used in place of the curtain.

The guide rail may have an integral clamp that can be hooked on an edge of the window glass. The guide rail having such clamp can readily be attached directly to the window glass without using an adhesive.

In the case where the curtain is opened and closed in the horizontal direction, the curtain assembly preferably has a pair of guide rails which is directly bonded to the inside surface of the window glass along upper and lower edges, respectively, of the window glass. The curtain is supported by a pair of rollers disposed on opposite sides of the curtain and rollingly movable along the upper guide rail. The lower guide rail is smaller in size than the upper guide rail, and the outer roller has a width smaller than the width of the inner roller. With this arrangement, a further reduction in the space between the curtain and the window glass can be obtained.

According to a second aspect of the present invention, there is provided a curtain assembly for a vehicle window, comprising: a window glass for the vehicle window, the window glass having an inside surface facing interiorly of the vehicle window; a pair of parallel spaced guide rails attached substantially directly to the inside surface of the window glass; and a curtain capable of being opened and closed along the guide rails, wherein each of the guide rails is composed of a first guide rail member having at its one end an attachment member, and a second guide rail member having one end received in the other end of the first guide rail member and movable relatively to the same in the longitudinal direction of the second guide rail member. The second guide rail member further has an attachment member disposed at its other end. The attachment member of the first guide rail member and the attachment member of the second guide rail member are firmly connected to the inside surface of the window glass.

Thus, each of the guide rails is separated into two parts, i.e., the first guide rail member and the second guide rail member that are relatively movably connected together end to end and relatively movable in the longitudinal direction.

With this arrangement, the guide rails are able to undergo thermal extension and shrinkage independently of the window glass. The first and second guide rail members are longitudinally aligned but they are separated from each other with a space defined therebetween so that differential thermal expansion between the window glass and the guide rails can be taken up via relative movement between the first and second guide rail members. Thus, the guide rails and the window glass are kept free from thermal stress and thermal deformation resulting therefrom. The guide rails are held in position against detachment from the window glass.

The first and second guide members are preferably connected together by a guide member. One of the first and second guide rail members is firmly connected to the guide member, while the other guide rail member is longitudinally movably connected to the guide member.

According to a third aspect of the present invention, there is provided a curtain assembly for a vehicle window, comprising: a window glass for the vehicle window, the window glass having an inside surface facing interiorly of the vehicle window; a pair of parallel spaced guide rails attached substantially directly to the inside surface of the window glass; and a curtain capable of being opened and closed along the guide rails, wherein each of the guide rails has one end firmly connected to the inside surface of the window glass, and the other end slidably connected to the inside surface of the window glass.

Since the other end of each guide rail is slidably connected to the window glass, the guide rail is allowed to expand and contract independently of the window glass. The differential thermal expansion generated between the window glass and the guide rail can be taken up or absorbed via sliding movement of the guide rail relative to the window glass. Thus, the guide rails and the window glass are kept free from thermal stress and thermal deformation resulting therefrom. The guide rails are held in position against detachment from the window glass.

In one preferred embodiment of the invention, said one end of each guide rail has a first attachment seat firmly connected by a threaded fastener (a bolt and a nut) to the window glass, and the other end of the guide rail has a second attachment seat slidably connected by a second threaded fastener (a bolt and a nut) to the window glass. The second attachment seat has an elongated hole extending parallel to a longitudinal axis of the guide rail and loosely receiving therein the second threaded fastener.

According to a fourth aspect of the present invention, there is provided a curtain assembly for a vehicle window, comprising: a window glass for the vehicle window, the window glass having an inside surface facing interiorly of the vehicle window; a pair of parallel spaced guide rails attached substantially directly to the inside surface of the window glass; and a curtain capable of being opened and closed along the guide rails, wherein each of the guide rails has a first attachment portion located at a first given position on the guide rail and a second attachment portion located at a second given position on the guide rail. The first attachment portion is firmly secured to the inside surface of the window glass, while the second attachment portion is bonded to the inside surface of the window glass via an elastic member.

Since the elastic member is elastically deformable, the guide rail is allowed to expand and contract independently of the window glass. The differential thermal expansion generated between the window glass and the guide rail can be taken up or absorbed via elastic deformation of the elastic member. Thus, the guide rails and the window glass are kept free from thermal stress and thermal deformation resulting therefrom. The guide rails are held in position against detachment from the window glass.

In order to protect the elastic member from deterioration by light, the window glass preferably has a masking layer applied to its inside surface along an outer peripheral edge portion of the window glass.

According to a fifth aspect of the present invention, there is provided a curtain assembly for a vehicle window, comprising: a window glass for the vehicle window, the window glass having an inside surface facing interiorly of the vehicle window; a pair of parallel spaced guide rails attached substantially directly to the inside surface of the window glass; and a curtain capable of being opened and closed along the guide rails, wherein each of the guide rails has a first attachment portion located at a first given position on the guide rail and a second attachment portion located at a second given position on the guide rail. The first attachment portion is firmly secured to the inside surface of the window glass, and the second attachment portion is attached to the inside surface of the window glass via a resilient member.

Since the resilient member is resiliently deformable, the guide rail is allowed to expand and contract independently of the window glass. The differential thermal expansion generated between the window glass and the guide rail can be taken up or absorbed via resilient deformation of the resilient member. Thus, the guide rails and the window glass are kept free from thermal stress and thermal deformation resulting therefrom. The guide rails are held in position against detachment from the window glass.

According to a sixth aspect of the present invention, there is provided a curtain assembly for a vehicle window, comprising: a window glass for the vehicle window, the window glass having an inside surface facing interiorly of the vehicle window; a pair of parallel spaced guide rails attached substantially directly to the inside surface of the window glass; and a curtain capable of being opened and closed along the guide rails, wherein each of the guide rails has a first attachment portion located at a first given position on the guide rail and a second attachment portion located at a second given position on the guide rail. The first attachment portion is firmly secured to the inside surface of the window glass, and the second attachment portion is slidably connected to the inside surface of the window glass via a stopper attached to the inside surface of the window glass.

With this arrangement, the guide rail is allowed to expand and contract independently of the window glass, thereby taking up the differential thermal expansion generated between the window glass and the guide rail. Thus, the guide rails and the window glass are kept free from thermal stress and thermal deformation resulting therefrom. The guide rails are held in position against detachment from the window glass.

In one preferred embodiment of the invention, the second attachment portion of each of the guide rails is an axial lug disposed on at least one end of the guide rail. The axial lug is slidably supported by the stopper.

According to a seventh aspect of the present invention, there is provided a curtain assembly for a vehicle window, comprising: a window glass for the vehicle window, the window glass having an inside surface facing interiorly of the vehicle window; a pair of parallel spaced guide rails attached substantially directly to the inside surface of the window glass; and a curtain capable of being opened and closed along the guide rails, wherein each of the guide rails has a surface facing the inside surface of the window glass and bonded over the entire area thereof to the inside surface of the window glass with an elastic member disposed therebetween.

By virtue of elastic deformation of the elastic member, the guide rail is allowed to expand and contract independently of the window glass. The differential thermal expansion generated between the window glass and the guide rail can be taken up or absorbed via elastic deformation of the elastic member. Thus, the guide rails and the window glass are kept free from thermal stress and thermal deformation resulting therefrom. The guide rails are held in position against detachment from the window glass.

In order to protect the elastic member from deterioration by light, the window glass preferably has a masking layer applied to the inside surface along an outer peripheral portion of the window glass. The elastic member is attached to the masking layer.

According to an eighth aspect of the present invention, there is provided a curtain assembly for a vehicle window, comprising: a window glass for the vehicle window, the window glass having an inside surface facing interiorly of the vehicle window; a pair of parallel spaced guide rails attached substantially directly to the inside surface of the window glass; a curtain extending between the guide rails and capable of being opened and closed along the guide rails; a winding shaft on which the curtain is wound, the winding shaft being disposed adjacent to one end of the guide rails and extending perpendicularly to the guide rails; and an elongated cover member for covering the winding shaft. The elongated cover member has one end firmly connected to one of the guide rails, and the other end slidably connected to a portion of the winding shaft.

With this arrangement, the cover member is allowed to expand and contract independently of the window glass. Accordingly, the differential thermal expansion generated between the cover and the window glass can be taken up or absorbed via sliding movement of the cover member relative to the winding shaft. Thus, the cover member and the window glass are kept free from thermal stress and thermal deformation resulting therefrom.

According to a ninth aspect of the present invention, there is provided a curtain assembly for a vehicle window, comprising: a window glass for the vehicle window, the window glass having an inside surface facing interiorly of the vehicle window; a pair of parallel spaced guide rails attached substantially directly to the inside surface of the window glass; a curtain extending between the guide rails and capable of being opened and closed along the guide rails; a winding shaft on which the curtain is wound, the winding shaft being disposed adjacent to one end of the guide rails and extending perpendicularly to the guide rails; and an elongated cover member for covering the winding shaft, wherein the elongated cover member has one end firmly connected to one of the guide rails, the other end of the elongated cover member being slidably connected to the other guide rail.

The cover member of the foregoing construction is allowed to expand and contract independently of the window glass, and so the differential thermal expansion generated between the cover and the window glass can be taken up or absorbed via sliding movement of the cover member relative to the other guide rail. Thus, the cover member and the window glass are kept free from thermal stress and thermal deformation resulting therefrom.

To secure the sliding movement of the cover member, the other end of the elongated cover member has an elongated hole extending in the longitudinal direction of the elongated cover member. A threaded fastener used for connecting the other end of the elongated cover member and the other guide rail is loosely received in the elongated hole so that the cover member is movable relative to the other guide rail within the length of the elongated hole.

According to a tenth aspect of the present invention, there is provided a curtain assembly for a vehicle window, comprising: a window glass for the vehicle window, the window glass having an inside surface facing interiorly of the vehicle window; a pair of parallel spaced guide rails attached substantially directly to the inside surface of the window glass; a curtain extending between the guide rails and capable of being opened and closed along the guide rails; a winding shaft on which the curtain is wound, the winding shaft being disposed adjacent to one end of the guide rails and extending perpendicularly to the guide rails; and an elongated cover member for covering the winding shaft, wherein the elongated cover member has an end bonded to a corresponding one of the guide rails via an elastic member.

By virtue of elastic deformation of the elastic member, the cover member is allowed to expand and contract independently of the window glass. The differential thermal expansion generated between the cover and the window glass can be taken up or absorbed via elastic deformation of the elastic member. Thus, the cover member and the window glass are kept free from thermal stress and thermal deformation resulting therefrom.

According to an eleventh aspect of the present invention, there is provided a curtain unit for use with a curved window glass of a vehicle window, the curtain unit comprising: a curved stationary shaft for being arranged along an inside surface of the curved window glass; a flexible tubular winding drum rotatably mounted on the stationary shaft; and a curtain fabric connected at one end to the winding drum so that it is wound on or released from the winding drum in response to rotation of the winding drum.

With this arrangement, the flexible tubular winding drum, as mounted on the curved stationary shaft, has a curved configuration of the same curvature as the curved stationary shaft. The curtain fabric wound on such a curved flexible winding drum automatically has a curved configuration having substantially the same curvature as the inside surface of the window glass. The curtain unit when used in combination with the curved window glass is able to minimize the spacing between the window glass and the curtain fabric and thus provide more space available for the passenger. The curtain fabric lying close to inside surface of the window glass is able to shield the vehicle interior from sunlight and from view taken from outside the vehicle, and also to provide a greater interior space available for the passenger. The passenger inside the vehicle is, therefore, protected against violation of its privacy and freed from feeling moral pressure or stress originated from a reduction in the vehicle interior space.

The stationary shaft preferably has a plurality of annular flanges fixedly mounted thereon and spaced at regular intervals in the longitudinal direction of the stationary shaft. The winding drum is rotatably mounted on the annular flanges.

The curtain fabric may have a pair of resin-coated side edge portions formed by using a molten resin.

According to one form of modification, the winding drum is comprised of a flexible tubular body, and a coiled spring member attached to an inner cylindrical surface of the tubular body.

In a second form of modification, the winding drum is comprised of a plurality of cylindrical blocks rotatably mounted on the stationary shaft. Each of the cylindrical blocks has a radial projection and a radial groove angularly spaced from each other and held in mesh with the radial groove and the radial projection, respectively, of the adjacent cylindrical block.

The curtain unit, when used in combination with a curved window glass having a curvature in a horizontal cross section, preferably includes a curved stationary shaft which is disposed horizontally along an upper edge of the curved window glass so that a curtain fabric is released or wound up in the vertical direction. As opposed to a curtain fabric adapted to be opened and closed in the horizonal direction, the vertically movable curtain fabric is substantially free from slack.

The curved window glass may have a masking layer applied to its inside surface over an area to which the stationary shaft is attached. By virtue of the masking layer, the stationary shaft is kept invisible when viewed from outside the vehicle, improving the appearance of the curtain unit.

The above and other objects, features and advantages of the present invention will become manifest to those versed in the art upon making reference to the detailed description and accompanying sheets of drawings in which preferred structural embodiments incorporating the principles of the present invention are shown by way of illustrative examples.

FIG. 1 is a side view of a motor vehicle or minivan in which a curtain assembly according to the present invention is incorporated;

FIG. 2 is a cross-sectional view taken along line II-II of FIG. 1, showing a first embodiment of the present invention;

FIG. 3 is an enlarged view of a portion III of FIG. 2;

FIG. 4 is a view in the direction of the arrow IV of FIG. 2;

FIG. 5 is an exploded perspective view of the curtain assembly according to the first embodiment of the present invention;

FIGS. 6(a) to 6(c) are views illustrative of operation of the curtain assembly of the first embodiment;

FIG. 7 is a cross-sectional view of a curtain assembly according to a second embodiment of the present invention;

FIG. 8 is a cross-sectional view showing a main portion of a curtain assembly designed for use with a roof window glass according to a third embodiment of the present invention;

FIG. 9 is a cross-sectional view of a curtain assembly according to a fourth embodiment of the present invention;

FIG. 10 is a cross-sectional view of a curtain assembly according to a fifth embodiment of the present invention;

FIG. 11 is a view in the direction of the arrow XI of FIG. 10;

FIG. 12 is a cross-sectional view showing the general construction of the curtain assembly of the fifth embodiment;

FIGS. 13(a) and 13(b) are views illustrative of the operation of the curtain assembly according to the fifth embodiment of the present invention;

FIG. 14 is a cross-sectional view of a curtain assembly according to a sixth embodiment of the present invention;

FIG. 15 is a cross-sectional view of a curtain assembly according to a seventh embodiment of the present invention;

FIG. 16 is a view similar to FIG. 2, but showing a curtain assembly according to an eighth embodiment of the present invention;

FIG. 17 is a perspective view of the curtain assembly of the eighth embodiment shown in FIG. 16;

FIG. 18 is an exploded perspective view of the curtain assembly shown in FIG. 17;

FIG. 19A is an enlarged view of a guide member used in the eighth embodiment;

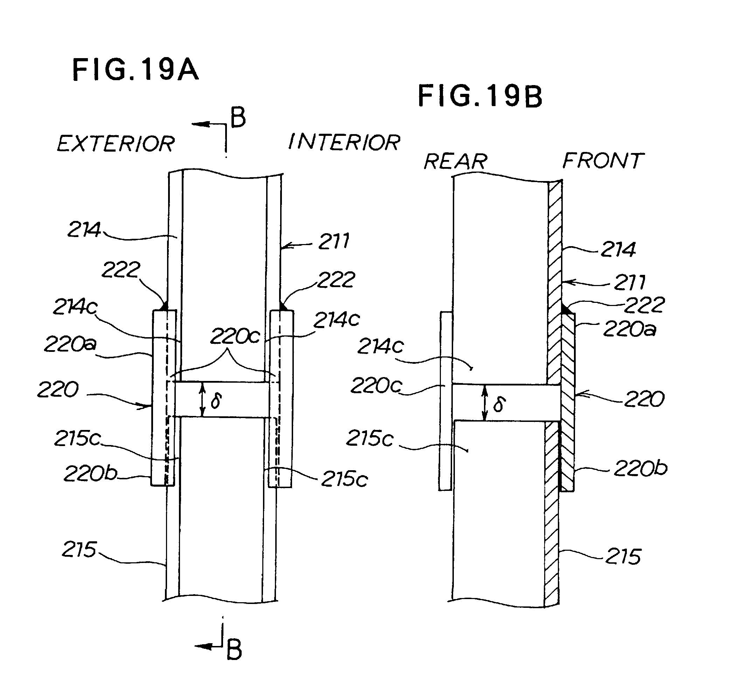

FIG. b is a cross-sectional view taken along line B-B of FIG. 19A;

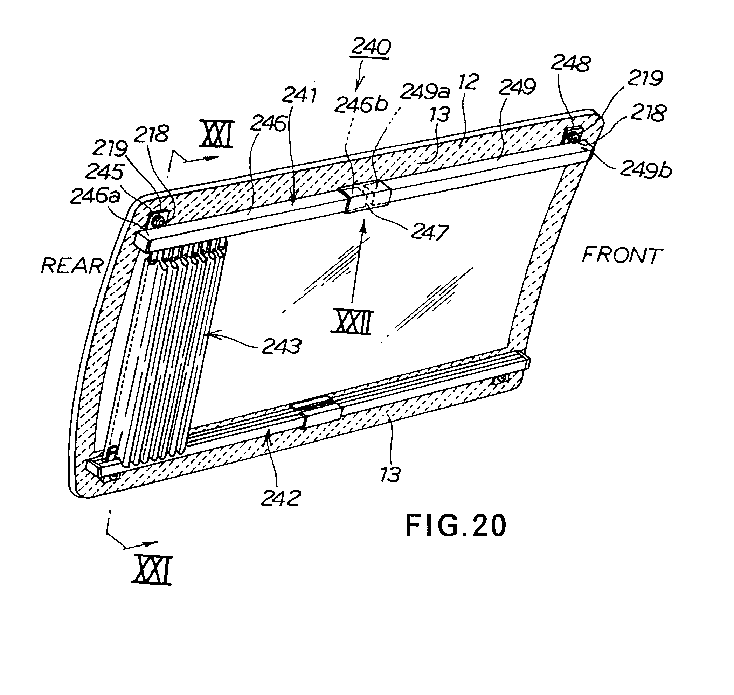

FIG. 20 is a perspective view of a curtain assembly according to a ninth embodiment of the present invention;

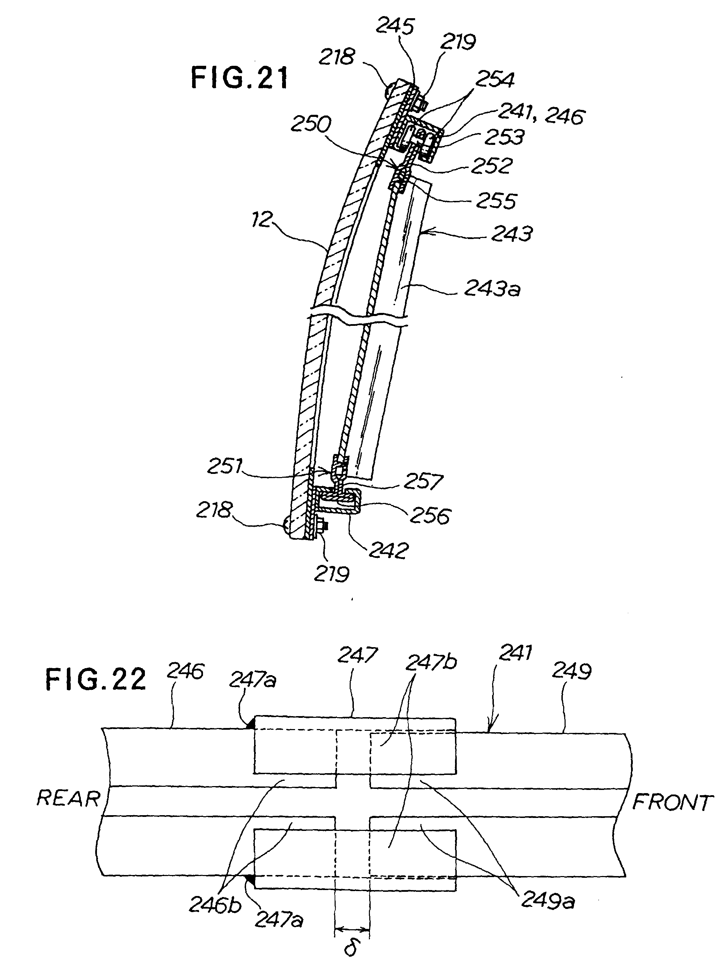

FIG. 21 is a cross-sectional view taken along line XXI-XXI of FIG. 20;

FIG. 22 is an enlarged view showing a guide member of the curtain assembly when viewed in the direction of the arrow XXII-XXII of FIG. 20;

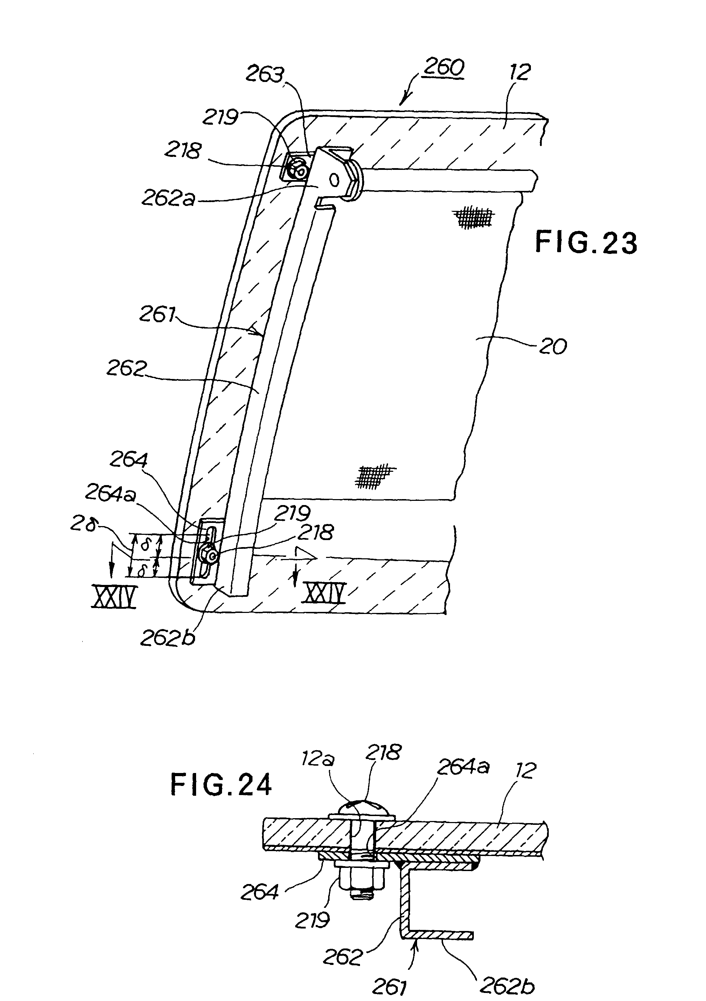

FIG. 23 is a perspective view of a portion of a curtain assembly according to a tenth embodiment of the present invention;

FIG. 24 is an enlarged cross-sectional view taken along line XXIV-XXIV of FIG. 23;

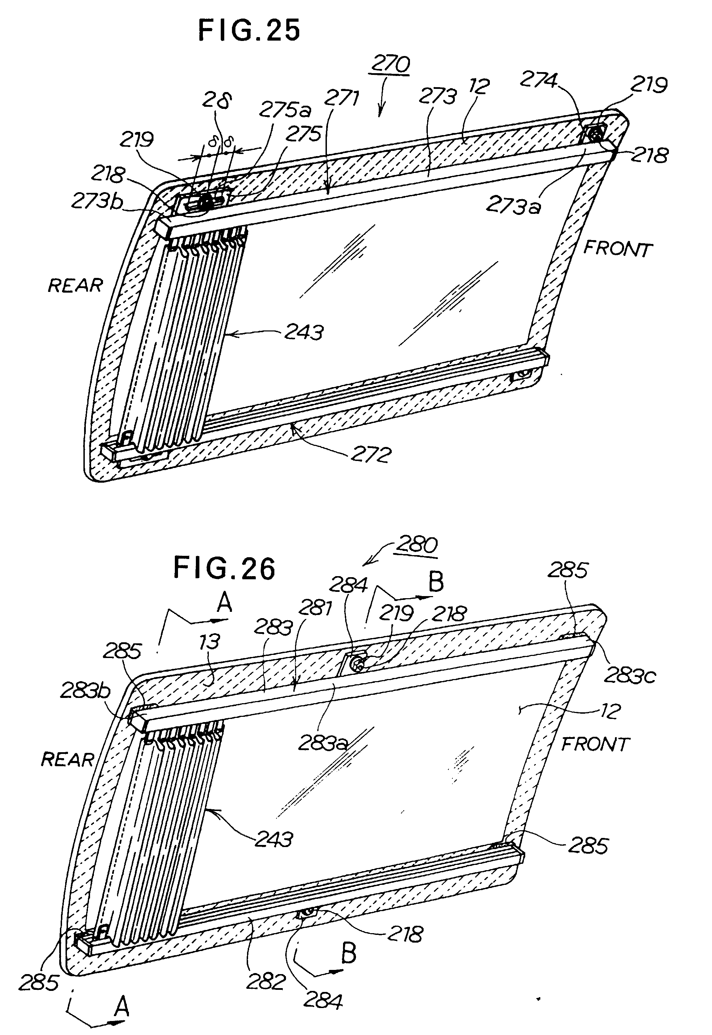

FIG. 25 is a perspective view of a curtain assembly according to an eleventh embodiment of the present invention;

FIG. 26 is a perspective view of a curtain assembly according to a twelfth embodiment of the present invention;

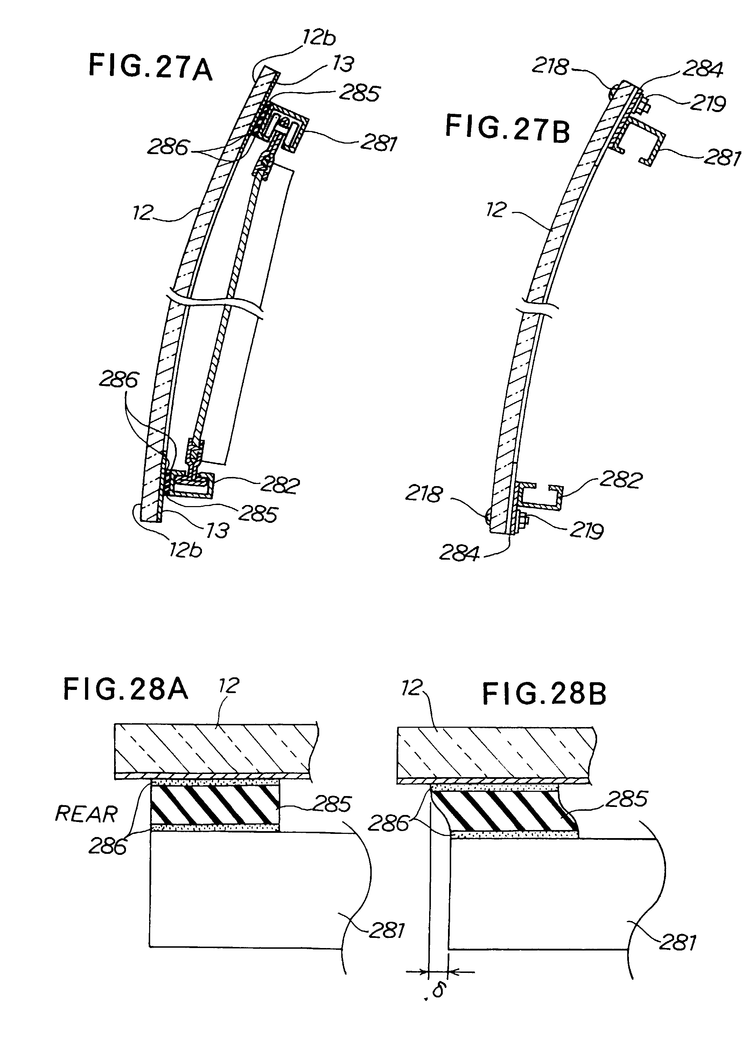

FIG. 27A is an enlarged cross-sectional view taken along line A-A of FIG. 26;

FIG. 27B is an enlarged cross-sectional view taken along line B-B of FIG. 26;

FIGS. 28A and 28B are enlarged cross-sectional views illustrative of the operation of an elastic member used in the twelfth embodiment;

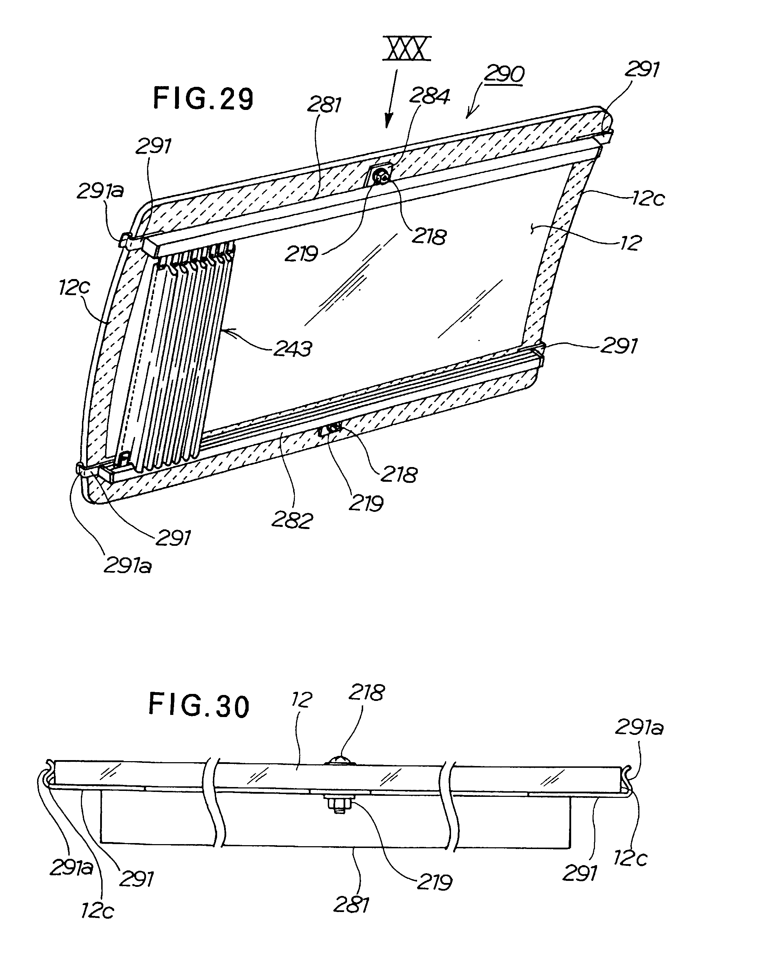

FIG. 29 is a perspective view of a curtain assembly according to a thirteenth embodiment of the present invention;

FIG. 30 is a plan view in the direction of the arrow XXX of FIG. 29;

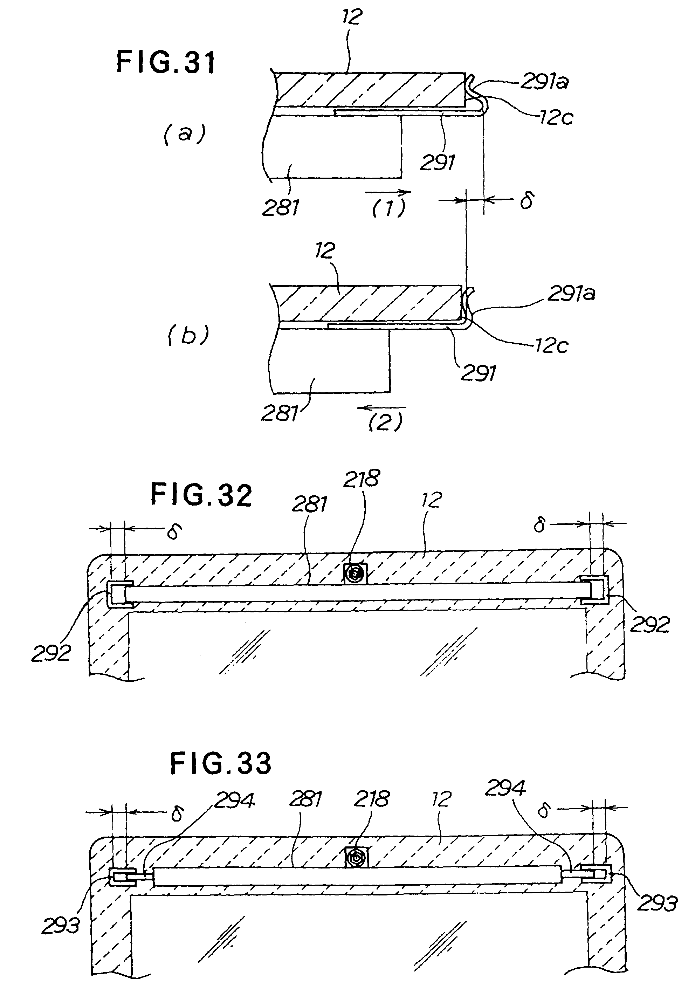

FIGS. 31(a) and 31(b) are views illustrative of the operation of an elastic member used in the thirteenth embodiment;

FIG. 32 is a view showing a first modification of the curtain assembly of the thirteenth embodiment;

FIG. 33 is a view showing a second modification of the curtain assembly of the thirteenth embodiment;

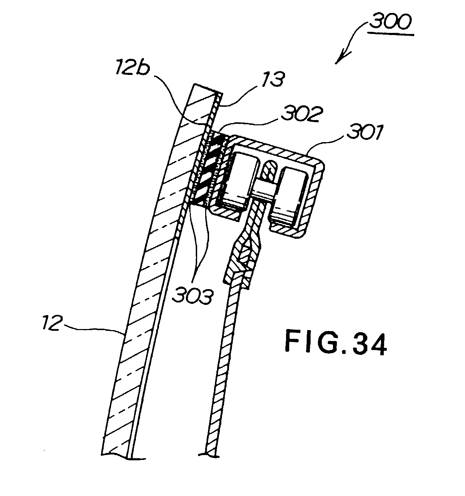

FIG. 34 is a cross-sectional view showing a portion of a curtain assembly according to a fourteenth embodiment of the present invention;

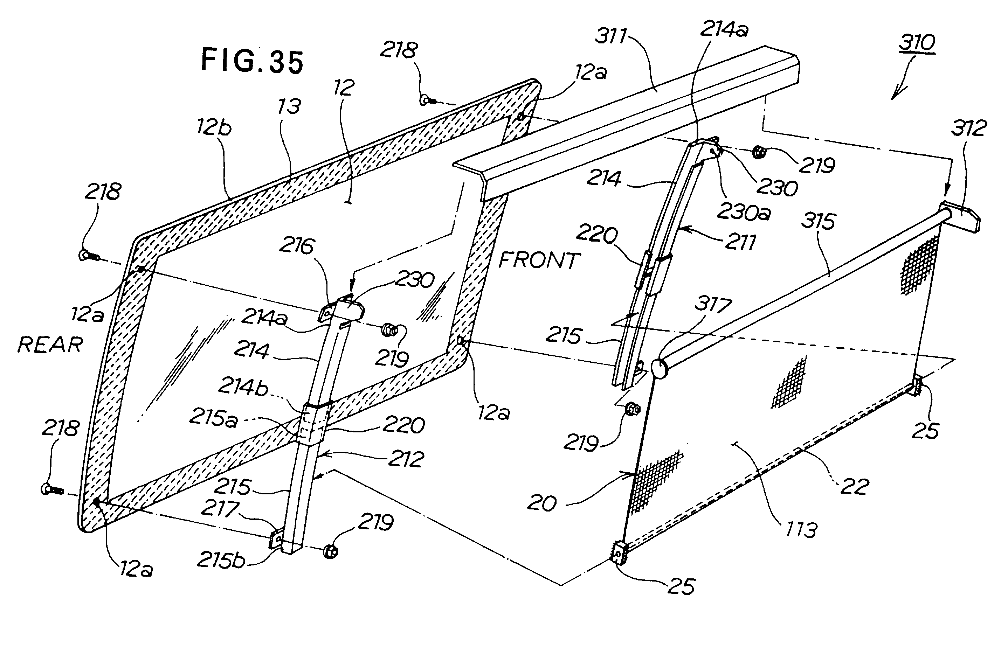

FIG. 35 is an exploded perspective view of the curtain assembly according to a fifteenth embodiment of the present invention;

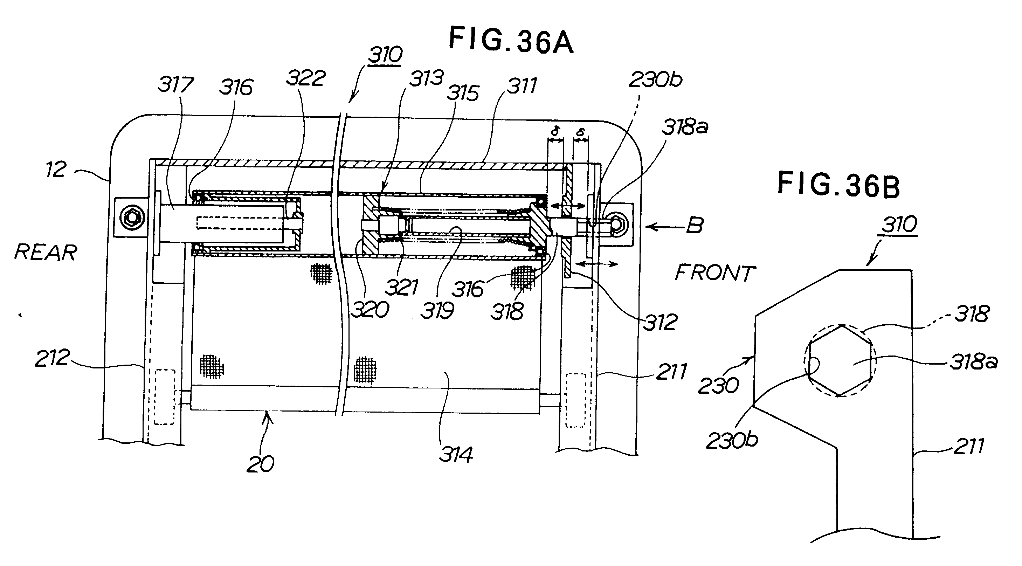

FIG. 36A is a front elevational view, with parts shown in cross section, of the curtain assembly of the fifteenth embodiment shown in FIG. 35;

FIG. 36B is an enlarged view of a front guide rail when viewed in the direction of the arrow B of FIG. 36A;

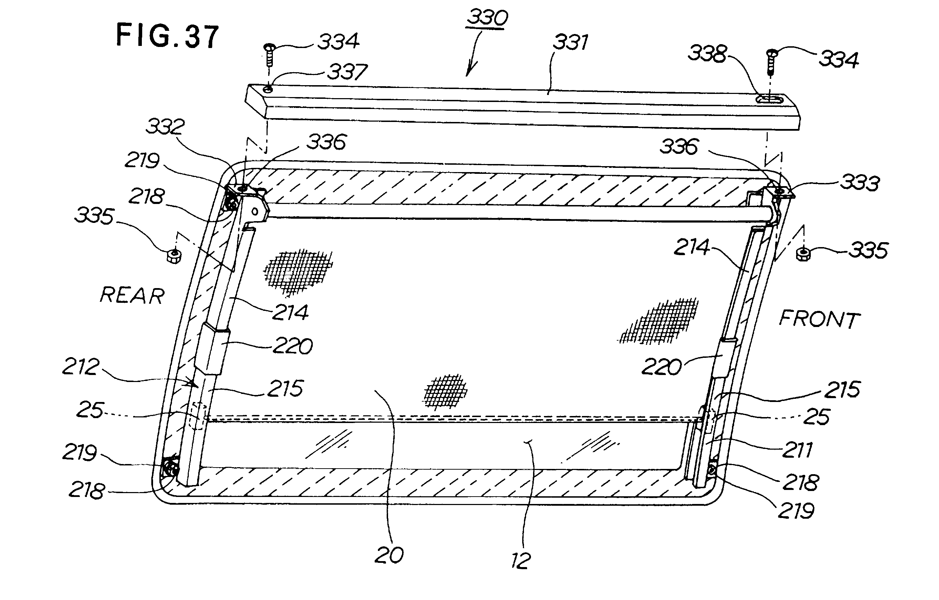

FIG. 37 is a partly exploded perspective view of a curtain assembly according to a sixteenth embodiment of the present invention;

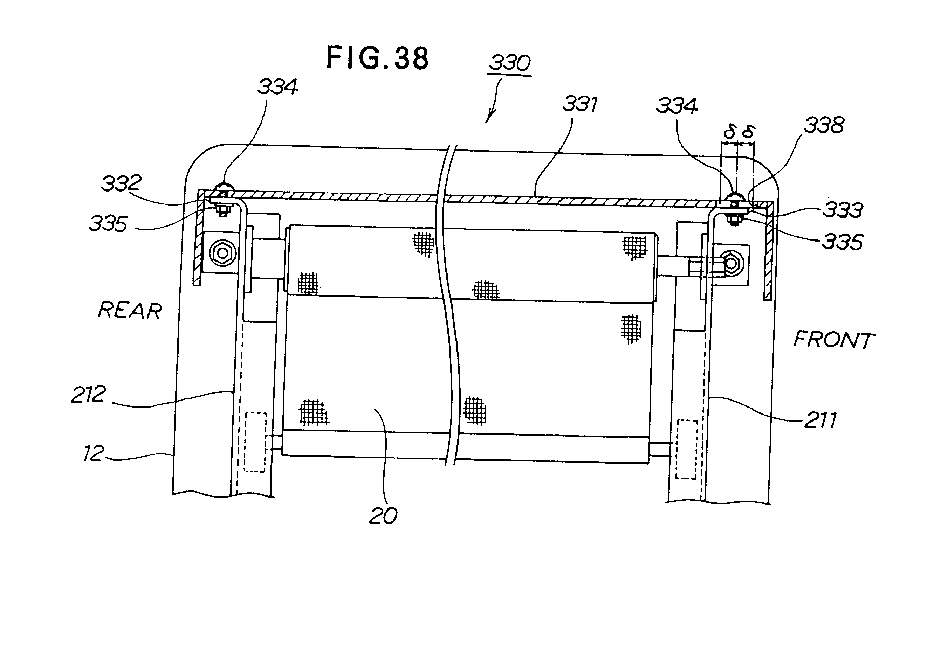

FIG. 38 is a cross-sectional view showing a cover member of the curtain assembly of the sixteenth embodiment;

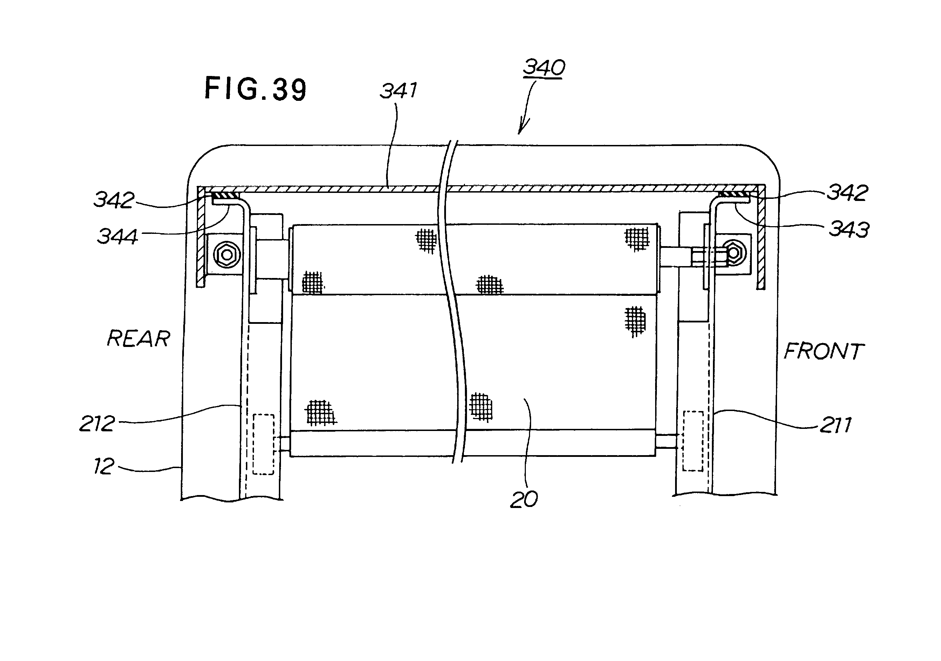

FIG. 39 is a cross-sectional view of a main portion of a curtain assembly according to a seventeenth embodiment of the present invention;

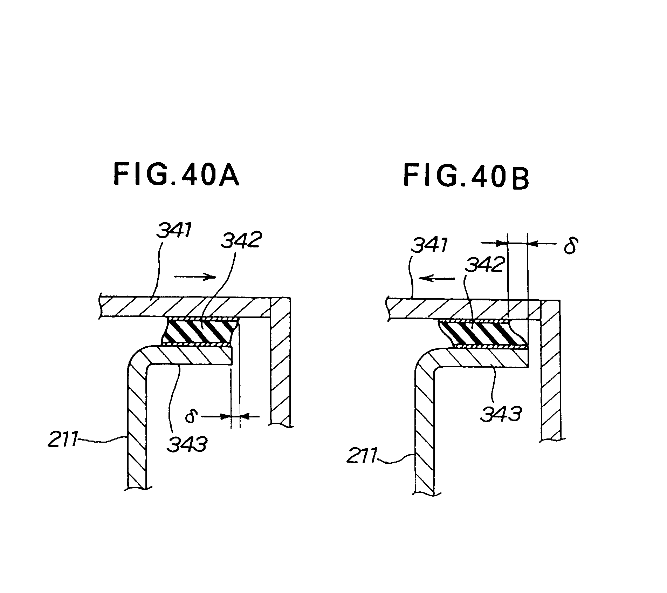

FIGS. 40A and 40B are views illustrative of the operation of an elastic member used in the seventeenth embodiment;

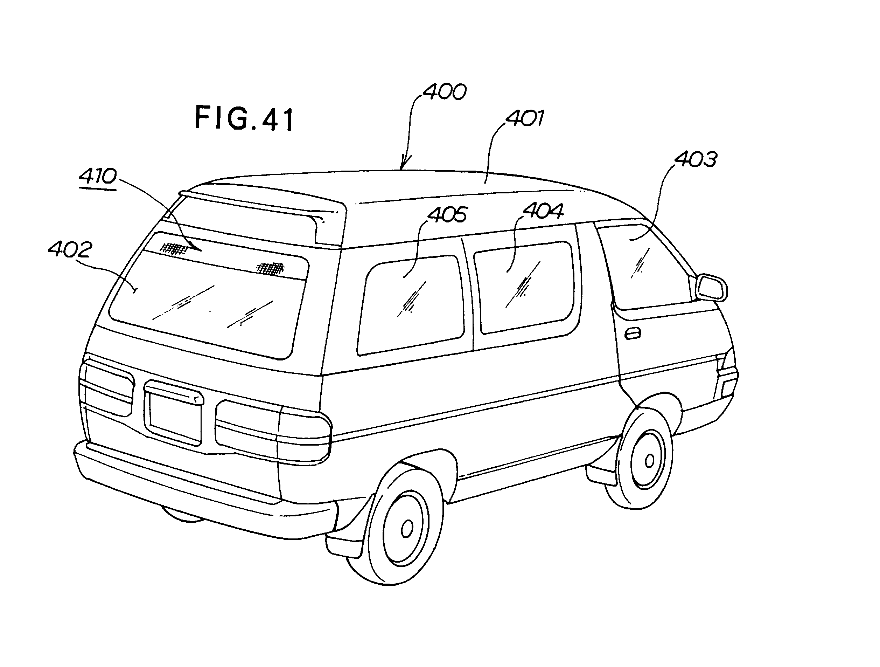

FIG. 41 is a perspective of a minivan in which a roll curtain assembly according to an eighteenth embodiment of the present invention is incorporated;

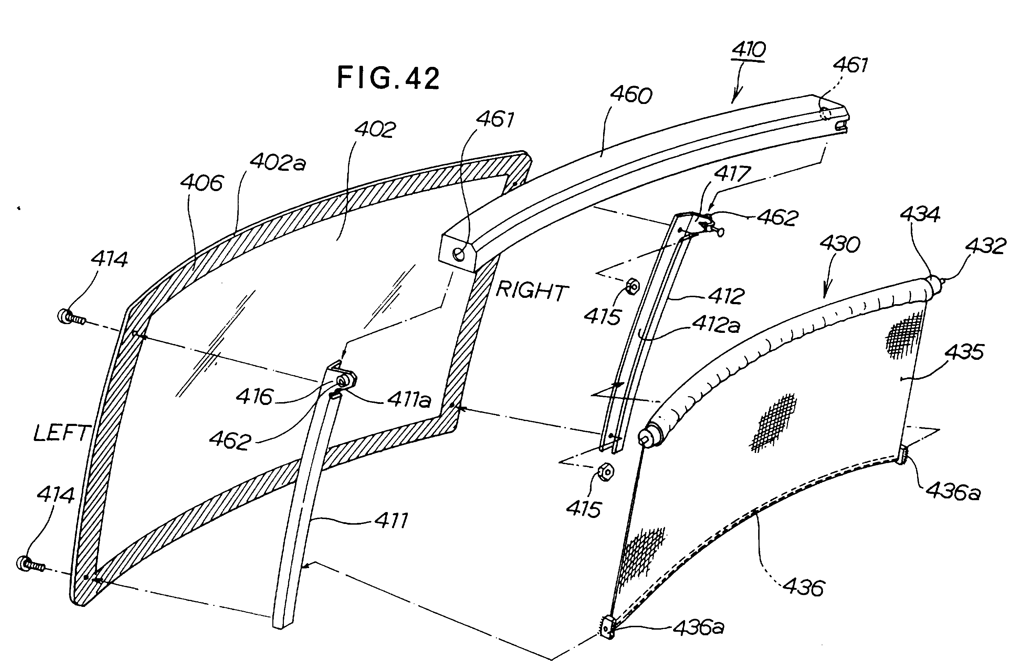

FIG. 42 is an exploded perspective view of the curtain assembly of the eighteenth embodiment;

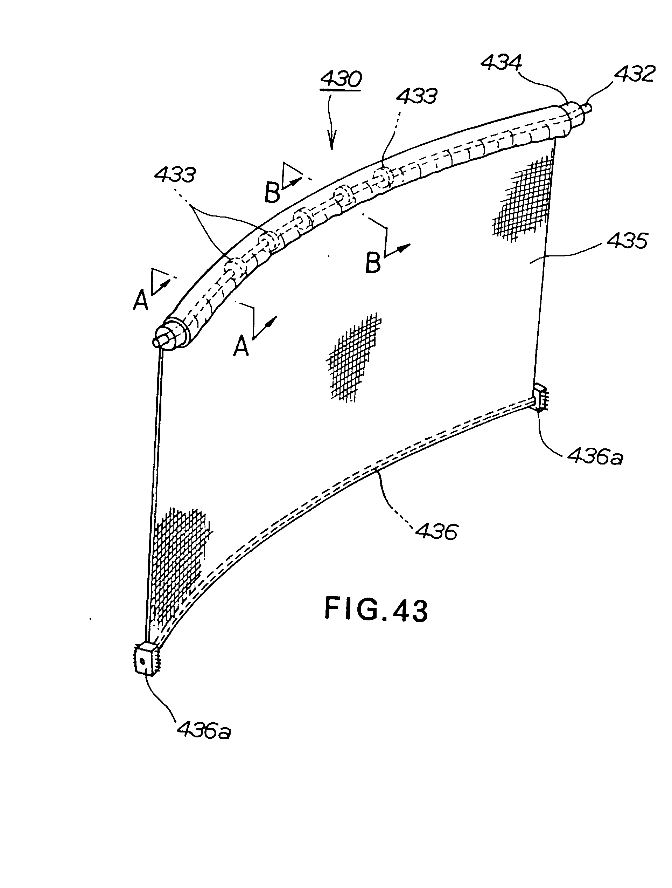

FIG. 43 is a perspective view of a curtain unit of the curtain assembly shown in FIG. 42;

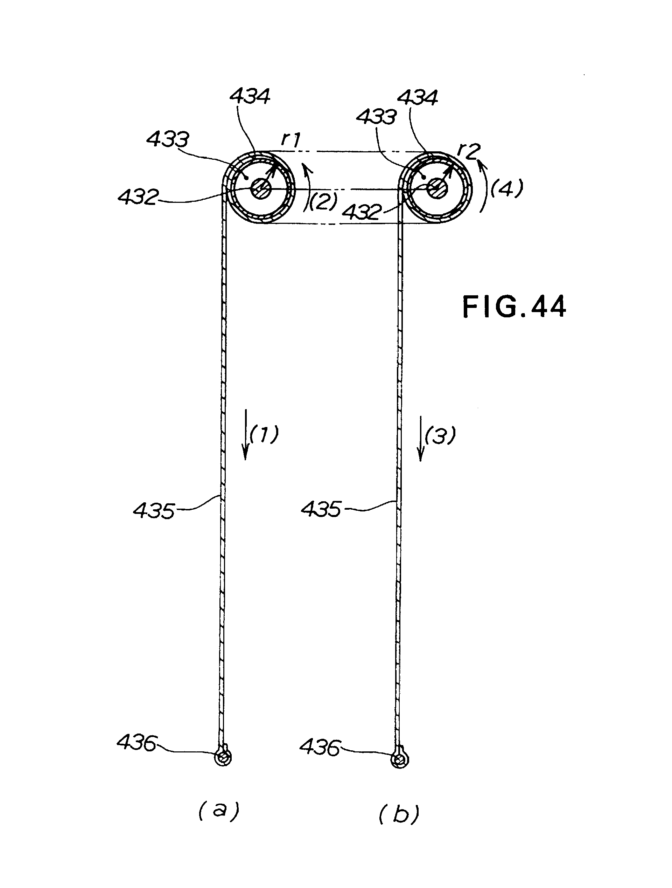

FIGS. 44(a) and 44(b) are cross-sectional views taken along line A-A and line B-B of FIG. 43, respectively;

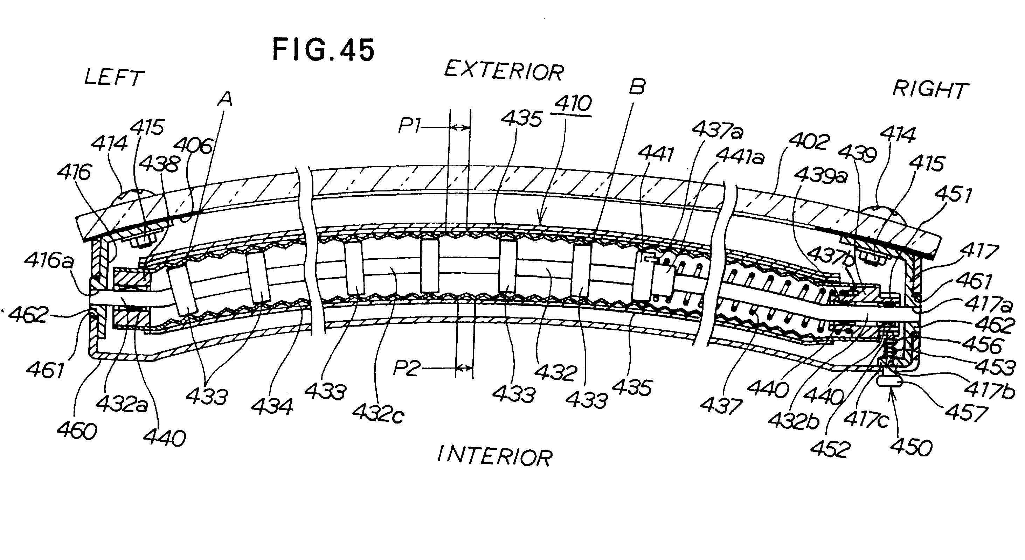

FIG. 45 is a detailed cross-sectional view of the curtain assembly of the eighteenth embodiment;

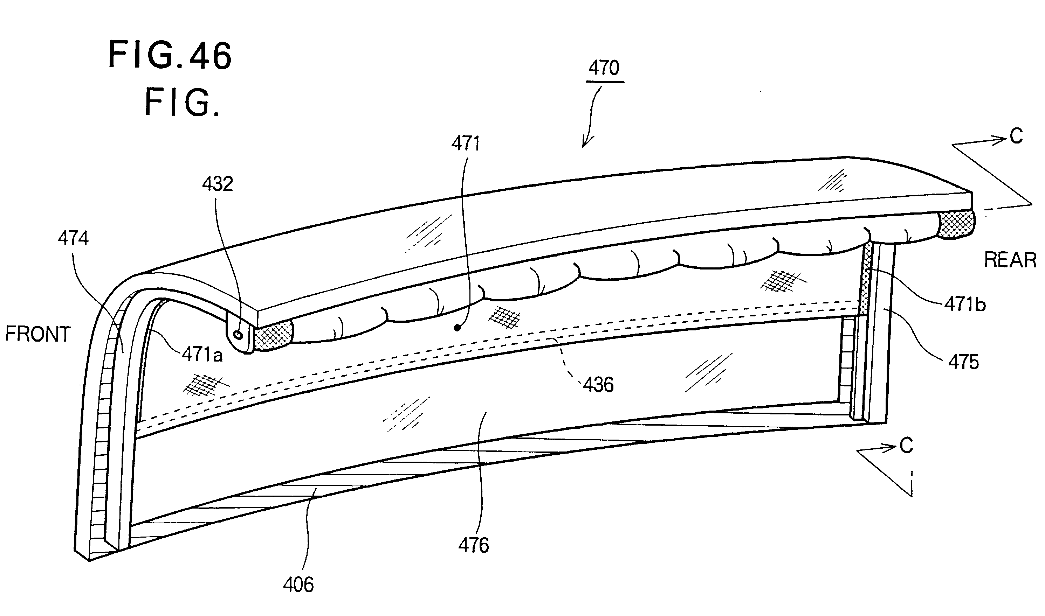

FIG. 46 is a perspective view of a curtain assembly according to a nineteenth embodiment of the present invention;

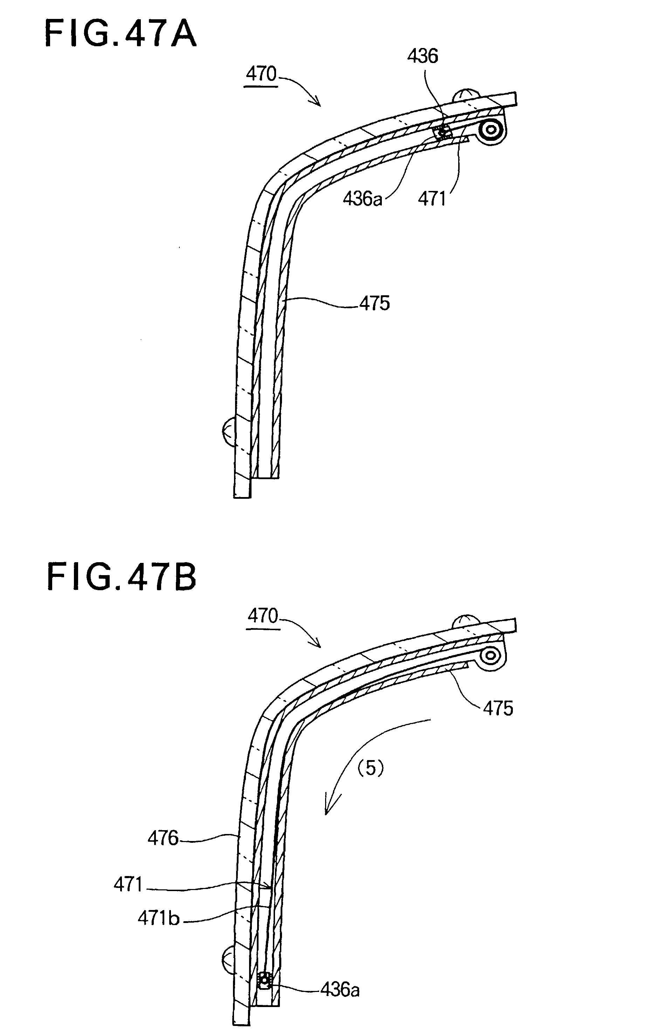

FIGS. 47A and 47B are cross-sectional views taken along line C-C of FIG. 46, showing the operation of the curtain assembly;

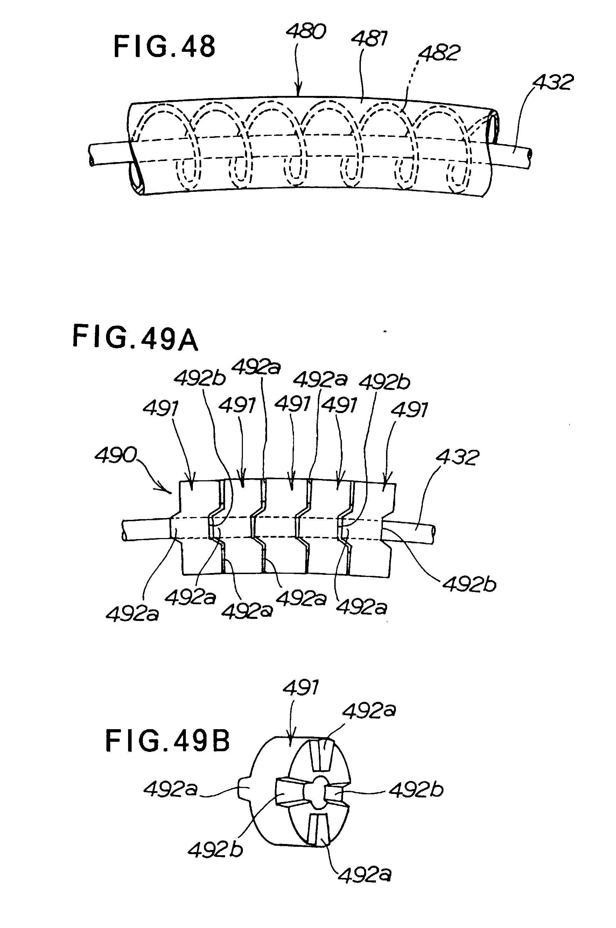

FIG. 48 is a fragmentary side view of a winding drum according to a twentieth embodiment of the present invention;

FIG. 49A is a fragmentary side view of a winding drum according to a twenty-first embodiment of the present invention;

FIG. 49B is a perspective view showing the structure of a cylindrical block used in the winding drum of FIG. 49a; and

FIG. 50 is a plan view showing a portion of a curtain assembly of related art.

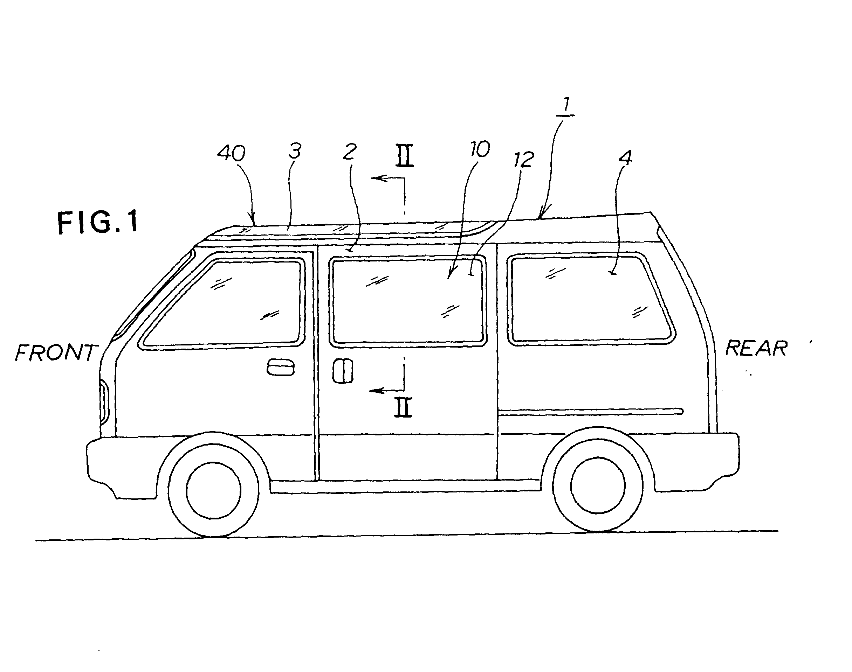

Referring to FIG. 1, a minivan 1 has a sliding side door 2 on its one side (left side in the illustrated embodiment) when viewed from the direction of movement of the minivan 1. The side door 2 is furnished with a curtain assembly 10 according to the present invention. In FIG. 1 reference numerals 3 and 4 denote a roof window glass and a quarter window glass, respectively.

FIG. 2 is a cross-sectional view takeh along line II-II of FIG. 1, showing structural details of the curtain assembly 10.

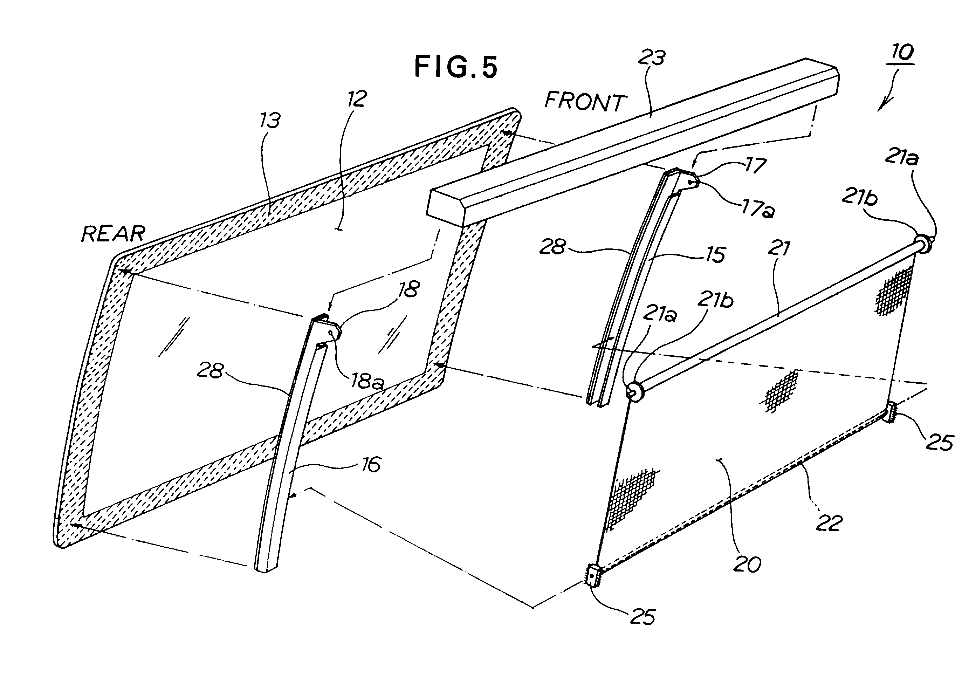

The curtain assembly 10 generally comprises a side door window glass 12 fixedly mounted within a window opening in the side door 2 via a gasket 11, a front guide rail 15 and a rear guide rail 16 (FIG. 5) that are substantially directly attached by bonding to an inside surface of the side door window glass 12 along its front and rear vertical edges, respectively, and a curtain 20 which can be opened and closed along the front and rear guide rails 15, 16.

The inside surface of the side door window glass 12 (which faces interiorly of the vehicle 1) and an inside surface of the curtain 20 (which faces interiorly of the vehicle 1) are spaced from each other by a distance S which is in the range of 3 to 20 mm, and preferably not greater than 15 mm.

The curtain 20 has an upper end 20a attached to a winding shaft 21, and a lower end 20b attached to a round bar or rod 22. The rod 22 supports on its opposite ends a pair of sliders 25, 25 (FIG. 5).

Designated by 23 is a cover member mounted on upper ends of the front and rear guide rails 15, 16 and covers the winding shaft 21.

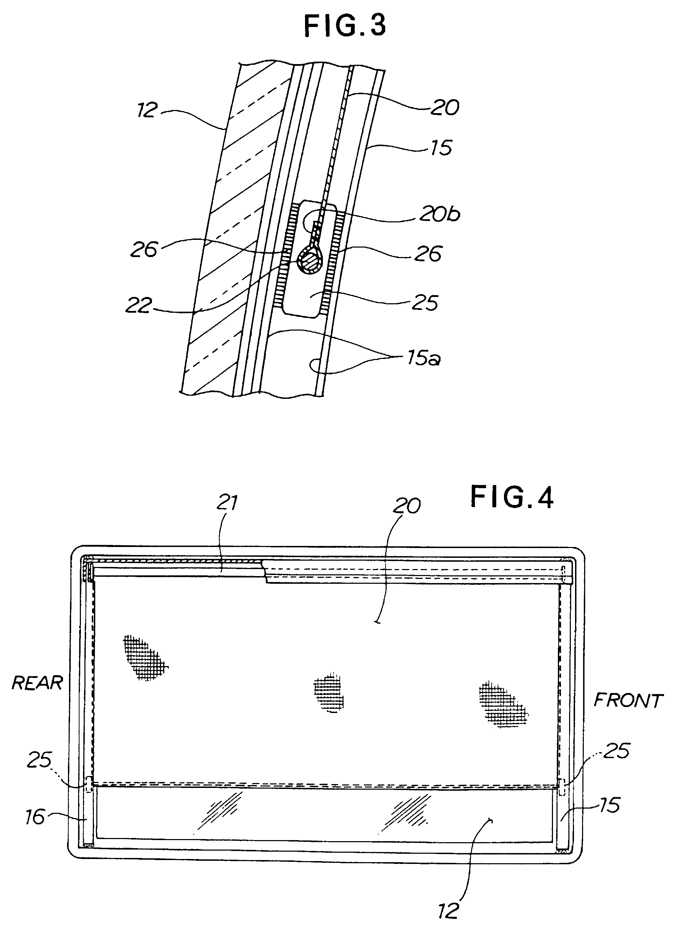

FIG. 3 is an enlarged view of a portion indicated by a circle III shown in FIG. 2, the view showing one of the sliders 25.

The slider 25 has a flock 26 on its opposite surfaces confronting two opposed inside'guide surfaces 15a, 15a of the front guide rail 15. The flocks 26, 26 on the opposite surfaces of the slider 25 are held in contact with the inside guide surfaces 15a, 15a of the front guide rail 15 so that the slider 25 moves smoothly up and down along the guide surfaces 15a, 15a of the front guide rail 15 when the curtain 20 is actuated.

The other slider 25 disposed inside the rear guide rail 16 has the same structure as the slider 25 just described above, and a further description thereof can, therefore, be omitted.

FIG. 4 is a view taken in the direction of the arrow IV of FIG. 2. As shown in the same figure, the front and rear guide rails 15, 16 are substantially directly attached by bonding to the inside surface of the side door window glass 12 along the front and rear edges thereof. The winding shaft 21 is rotatably supported on the upper ends of the front and rear guide rails 15, 16, and the sliders 25, 25 are vertically movably disposed inside the front and rear guide rails 15, 16, respectively.

FIG. 5 is an exploded perspective view of the curtain assembly 10 according to the first embodiment of the present invention.

The side door window glass 12 is a curved glass having a masking layer 13 provided on its inside side surface along an outer peripheral edge portion thereof (including an area in which the guide rails 15, 16 and the winding shaft 21 are disposed). The masking layer 13 is comprised of a film having a roughened surface coarser than the inside surface of the side door window glass 12 window. Preferred examples of the masking film may include a film of an inorganic pigment containing glass frit which has been formed by screen printing followed by baking at high temperatures, and a cured film of an organic substance containing a pigment or a die. The masking film layer 13 is provided for the purpose of concealing the curtain assembly 10 (excluding the curtain 20 in the closed state) from view taken from the outside of the vehicle or minivan 1 (FIG. 1), and protecting an adhesive 28 against deterioration by light, for example. The adhesive 28 is a curable adhesive and used for bonding the front and rear guide rails 15, 16 to the inside surface of the side door window glass 12.

The front and rear guide rails 15, 16 are curved so as to fit with a curvature of the inside surface of the curved side door window glass 12, and they are directly bonded to the masking film layer 13 of the side door window glass 12 by means of the curable adhesive 28. The adhesive 28 may be in the form of a double-coated adhesive tape. Since the masking film layer 13 has a roughened outside surface coarser than the inside surface of the side door window glass 12, it is able to retain a sufficient amount of adhesive 28 which will enable the adhesive 28 to perform firm and reliable adhesion between the front and rear guide rails 15, 16 and the masking film layer 13 of the side door window glass 12.

The front and rear guide rails 15, 16 have support flanges 17, 18 at their upper ends for rotatably supporting thereon the winding shaft 21. A pair of support pins 21a, 21a formed on opposite ends of the winding shaft 21 is rotatably received in a pair of bearing holes 17a, 18a of the support flanges 17, 18, respectively. Thus, the winding shaft 21 is rotatably supported on the upper ends of the front and rear guide rails 15, 16.

The winding shaft 21 is coupled with a wind-up unit (not shown). The wind-up unit includes a wind-up mechanism constructed to provide the winding shaft 21 with a winding force tending to wind up the curtain 20 around the winding shaft 21, and a stop mechanism (lock mechanism) for keeping the winding shaft 21 stationary or non-rotatable against the winding force. The wind-up mechanism may be replaced by a handle (not shown) which is connected to the winding shaft 21 for manual operative to wind up the curtain 20 around the winding shaft 21. As a further alternative, an electric drive motor (not shown) connected to the winding shaft 21 may be used for opening and closing the curtain 20.

In FIG. 5, designated by reference characters 21b, 21b are annular flanges provided at base portions of the support pins 21a, 21a of the winding shaft 21.

The curtain 20 is a flexible sheet-like member having a light-absorbing capacity, a light shielding capability, and a sound absorbing quality so that the tone of light and the amount of radiant energies, such as light, heat and sound can be controlled. The curtain 20 may be detachable to facilitate replacement when it is damaged or when another curtain of different material or design pattern is desired in view of application requirements.

The curtain assembly 10 of the foregoing construction is assembled in the manner described below.

At first, the front and rear guide rails 15, 16 are attached by bonding to the inside surface of the side door window glass 12. Then, the winding shaft 21 is mounted on the support flanges 17, 18 of the guide rails 15, 16. Subsequently, the side door window glass 12 is mounted within the window opening of the side door 2 (FIG. 2). Since a work for assembling together the side door window glass 12, the front and rear guide rails 15, 16 and the winding shaft 21 can be performed outside the vehicle or minivan 1 (FIG. 1), it is possible to simplify the overall curtain-attaching operation of the curtain assembly 10.

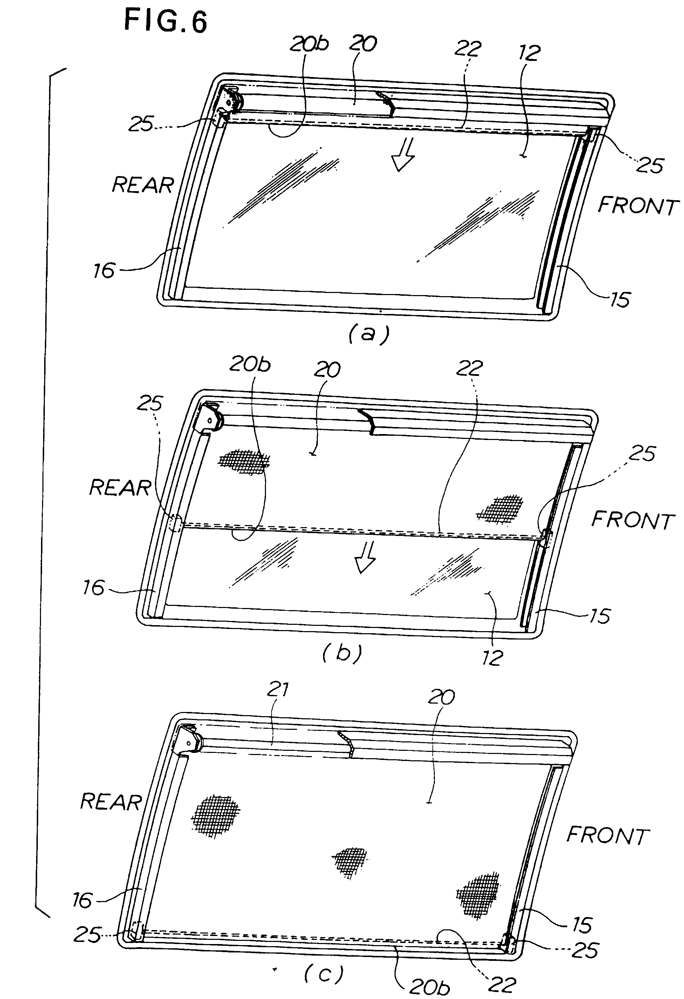

Now, operation of the curtain assembly 10 will be described below with reference to FIGS. 6(a) - 6(b).

FIGS. 6(a) - 6(c) illustrate the manner in which the curtain 20 of the curtain assembly is pulled down until it moves from the original fully open position to the fully closed position through an intermediate half-closed position.

The curtain 20 shown in FIG. 6(a) is in its original fully open position in which the sliders 25, 25 are held in abutment with corresponding stoppers (not shown) provided at upper ends of the respective guide rails 15, 16 under the winding force of the wind-up mechanism (not shown) operatively connected to the winding shaft 21 (FIG. 6(c)). When the curtain 20 is to be closed, a passenger of the vehicle pulls the curtain 20 downwards against the winding force of the wind-up mechanism while gripping the rod 22. As the rod 22 moves downwards along the guide rails 15, 16 together with the sliders 25, 25, as indicated by the arrow, the curtain 20 is gradually unwound from the winding shaft 21.

Continuing downward pull of the curtain 20 brings the rod 22 to an intermediate position on the respective guide rails 15, 16, as shown in FIG. 6(b). In this instance, if the rod 22 is freed or released from the downward pulling force, the stop mechanism (not shown) of the wind-up unit operates to stop the rod 20 at the intermediate position on the guide rails 15, 16. Consequently, the curtain 20 is held in a half-closed position shown in FIG. 6(b).

When the curtain 20 is to be fully opened, the rod 22 is further pulled downwards with a force exceeding the winding force of the wind-up mechanism. As the rod 22 moves downwards together with the sliders 25, 25, the curtain 20 is pulled downwards, as indicated by the arrow shown in FIG. 6(b). In this instance, the wind-up mechanism of the wind-up unit becomes active via the downward movement of the curtain 20, and the stop mechanism is released or deactivated. Thus, the curtain 20 can be unwound from the winding shaft 21 as the rod 22 moves downwards.

Continuing downward pull of the rod 22 brings the rod 22 to the lower ends of the guide rails 15, 16. Upon arrival at the guide rails' lower ends, the rod 22 is freed from the downward pull whereupon the stop mechanism of the wind-up unit operates to stop the rod 22 at the lower end of the guide rails 15, 16. The curtain 20 is thus disposed in the fully closed position shown in FIG. 6(c).

When the fully closed curtain 20 is to be opened, the rod 22 is slightly lowered to release the working condition of the stop mechanism and after that the rod 22 is made free to allow the curtain 20 to be wound up around the winding shaft 21 by the winding force applied from the wind-up mechanism of the wind-up unit.

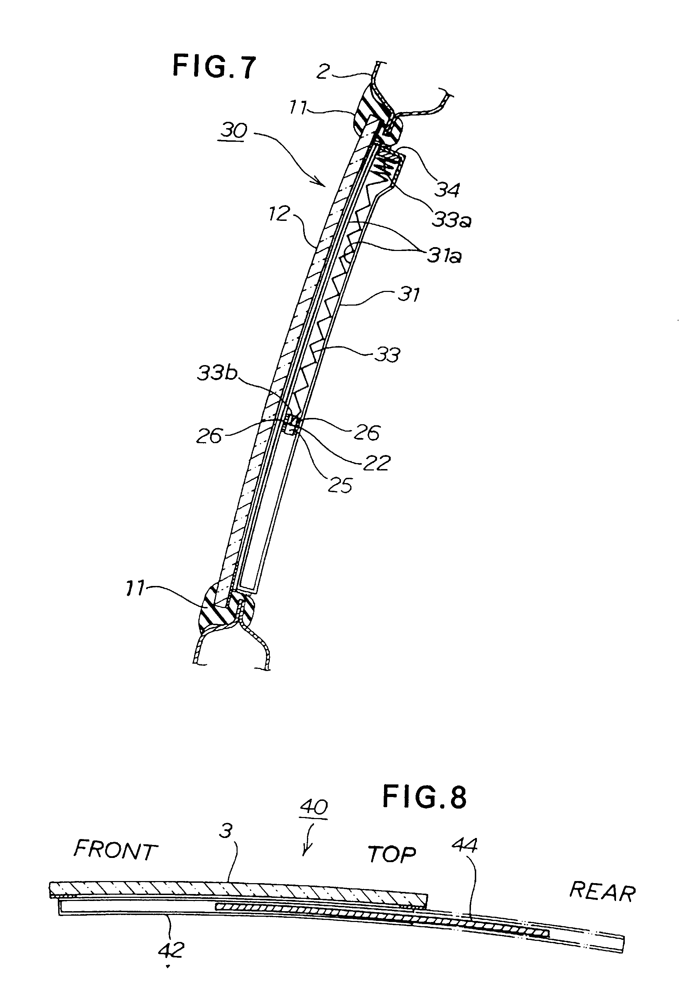

FIG. 7 shows in cross section a curtain assembly 30 according to a second embodiment of the present invention. In FIG. 7, these parts which are the same as those of the first embodiment described above are designated by the same reference characters, and a further description thereof can, therefore, be omitted.

The curtain assembly 30 includes a side door window glass 12 fixedly mounted within a window opening in a side door 2 via a gasket 11, a front guide rail 31 and a rear guide rail (not shown but symmetrical in structure with the front guide rail 31) that are directly bonded to an inside surface of the side door window glass 12 along its front and rear vertical edges, respectively, and an accordion curtain 33 which can be opened and closed along the front and rear guide rails 31.

The accordion curtain 33 has an upper end 33a received in and attached to a cover member 34, the lower end 33b of the curtain 33 being attached to a round bar or rod 22 in the same manner as the curtain 20 in the first embodiment.

A pair of sliders 25 (one being shown) is mounted on opposite ends of the rod 22. Each slider 25 has on its opposite surfaces a flock 26 slidably engageable with each of two opposed inside guide surfaces 31a, 31a of the corresponding guide rail 31.

FIG. 8 shows in cross section a curtain assembly 40 according to a third embodiment of the present invention. The curtain assembly 40 is associated with the roof window glass 3 shown in FIG. 1. In FIG. 8, the left-hand side is referred to as "front side of the vehicle", the right-hand side as "rear side of the vehicle", and the upper side as "upper side of the vehicle". In addition, these parts which are identical to those of the first embodiment described above are designated by the same reference characters, and a further description thereof can, therefore, be omitted.

The curtain assembly 40 of the roof window includes a roof window glass 3, a right guide rail 42 and a left guide rail (not shown but symmetrical in structure with the right guide rail 42) that are directly bonded to an inside surface of the roof window glass 3 along its right and left side edges, respectively, and a shutter 44 which can be opened and closed along the right and left guide rails 42. The shutter 44 is movable along the right and left guide rails 42 in the front-and-rear (longitudinal) direction of the vehicle.

The right and left guide rails 42 may have an extension projecting rearwardly from the rear end of the roof window glass 3, as indicated by the phantom lines shown in FIG. 8. The curtain assembly 40 is not limited in application to a horizontally mounted window glass, such as the roof window glass 3 in the illustrated embodiment, but applicable to a substantially vertically mounted window glass, such as a side door window glass.

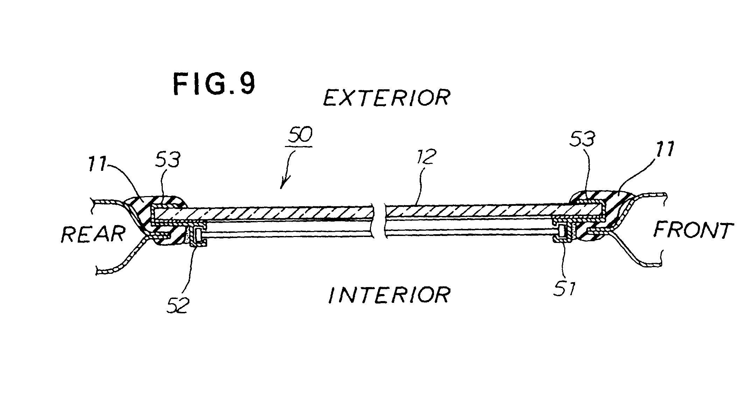

FIG. 9 shows in cross section a curtain assembly 50 according to a fourth embodiment of the present invention. In this embodiment, the curtain assembly 50 is applied to the side door window glass 12 shown in FIG. 1. In FIG. 9, the left-hand side is referred to as "rear side of the vehicle", the right-hand side as "front side of the vehicle", and the upper side as "left-hand exterior side of the vehicle". In addition, these parts which are identical to those of the first embodiment described above are designated by the same reference characters, and a further description thereof can, therefore, be omitted.

The curtain assembly 50 includes a front guide rail 51 and a rear guide rail 52 each having a clamp 53, 53 formed integrally the corresponding guide rail 52, 53. The clamps 53, 53 are fitted around front and rear edges of the side door window glass 12 to attach the front and rear guide rails 51, 52 to the side door window glass 12.

In the first to fourth embodiments described above, the guide rails 15, 16; 31; 42; 51, 52 are attached to the inside surface of the window glass 12; 3 by means of a curable adhesive or a double-sided adhesive tape. The disclosed method of attaching the guide rails should be construed as illustrative rather than as restrictive. It is possible according to the present invention to attach the guide rails to the window glass by means of threaded fasteners threaded into holes formed in the window glass.

As an alternative, the guide rails may be partly embodied in a gasket 11. This structure may be obtained when gasket 11 is formed by injection-molding around the periphery of the window glass. When the injection molding of the gasket 11 is completed, the guide rails are automatically attached to the window glass.

Furthermore, fasteners, hooks, buttons and so forth may be used to attach the guide rails to the window glass.

In addition, the guide rails may be attached to the window glass by extrusion molding. In this case, the window glass is subjected to a primer coating process or the like treatment which is effective to improve the bond properties of a desired portion of one surface of the window glass, and a semisoft solid plastic is extruded through a die opening to produce a continuous strip in the form of a guide rail. In the extrusion process, the plastic is extruded directly onto the primer-coated surface portion of the window glass so that the guide rail formed by extrusion is attached to the inside surface window glass.

The window glass 3, 12 used in each of the first to fourth embodiments is a curved glass, however, a flat glass may be used according to the invention.

In addition, the number of the guide rail used in the first to fourth embodiment is two and two such guide rails are disposed in substantially parallel spaced relation. It is possible according to the present invention to omit one guide rail in which instance a plurality of regularly spaced stoppers are provided in place of the omitted guide rail to stop the curtain at different positions so that the curtain can be opened and closed stepwise.

The guide rails used in the embodiments described above are shaped into a channel having a U-shaped cross section and have two opposed inside guide surfaces. The invention should by no means be limited to the illustrated embodiments but may include the use of an angled guide rail having an L-shaped cross section guide. In the latter case, in addition to the inside surface of the L-shaped guide rail, the inside surface of the window glass can be used as a guide surface. By the use of the L-shaped guide rail, it is possible to reduce the weight of the guide rail and simplify the structure of the guide rail.

In the first and second embodiment, the side door window glass 12 is provided with a curtain. In the third embodiment, the roof window glass 3 is provided with a shutter. Though not shown, the quarter window glass 4 (FIG. 1) may be provided with a curtain which can be opened and closed along a guide rail directly attached to the inside surface of the quarter window glass 4. In this case, the guide rail may be integral with either a hinge member (not shown) used for opening and closing the quarter window glass 4, or a lock member (not shown) used for locking the quarter window glass 4.

It is also possible, according to the present invention, to provide a curtain on a rear window glass and so forth via a guide rail or guide rails.

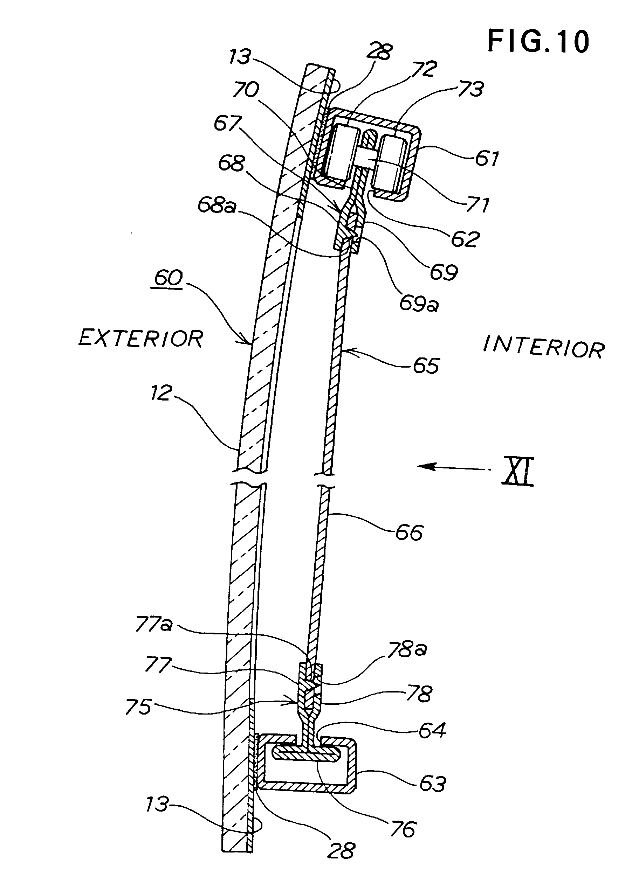

FIG. 10 shows in cross section a curtain assembly 60 according to a fifth embodiment of the present invention. In FIG. 10 these parts which are identical to those of the first embodiment are designated by the same reference characters, and a further description thereof can, therefore, be omitted.

The curtain assembly 60 includes a side door window glass 12, an upper guide rail 61 directly attached by bonding to an inside surface of the side door window glass 12 along an upper edge thereof, a lower guide rail 63 directly attached by bonding to the inside surface of the side door window glass 12 along a lower edge thereof, and a curtain 65 that can be opened and closed along the upper and lower guide rails 61, 63.

The upper guide rail 61 is formed from a C-shaped light-weight section steel member and bonded by an adhesive 28 to a masking film layer 13 of the window glass 12 with a slit or opening 62 facing downwards. Similarly, the lower guide rail 63 is formed from a C-shaped light-weight section steel member and bonded by an adhesive 28 to a masking film layer 13 of the window glass 12 with a slit or opening 64 facing upwards.

The masking film layer 13 has a roughened outside surface coarser than the surface of the side door window glass 12 and hence is able to insure reliable bonding process performed by the adhesive 28 which in turn insures firm adhesive bonding of the upper and lower guide rails 61, 63 to the inside surface of the side door window glass 12.

The guide rails 61, 63 are directly attached by bonding to the inside surface of the window glass 12 to provide the curtain assembly 60 on the side door window, however, they are not visible from outside the vehicle by virtue of the presence of the masking film layer 13. The masking film layer 13 serves also as a light shield or guard for the protection of the adhesive 28 against deterioration by light.

The curtain 65 is composed of a curtain fabric 66 of a size which is large enough to cover substantially the entire area of the side door window glass 12, a plurality of upper sliders 67 attached at regular intervals to an upper edge of the curtain fabric 66, and a plurality of lower sliders 75 attached at regular intervals to a lower edge of the curtain fabric 66.

The upper sliders 67 each include an attachment member or clamp 70 structured to grip a portion of the upper edge of the curtain fabric 66, a shaft 71 extending through the thickness of an upper portion of the clamp 70, an outer roller 72 and an inner roller 73 rotatably supported on opposite ends of the shaft 72 and received in the upper guide rail 61 for rolling movement along the upper guide rail 61.

Reference numerals 68 and 69, respectively, denote an outer grip finger and an inner grip finger of the clamp 70. The outer grip finger 68 projects downwardly from the slit 62 and extends in confrontation to the inside surface of the side door window glass 12. The outer grip finger 68 has a pointed prong or pin 68a piercing through the curtain fabric 66. The inner grip finger 69 projects downwardly from the slit 62 and facing interiorly of the vehicle. The inner grip finger 69 has an opening or hole 69a for receiving therein a tip end portion of the pin 68a.

The lower sliders 75 are each composed of an inverted T-shaped member having a slider portion 76a slidably received in the lower guide rail 63, a pair of outer and inner grip fingers 77 and 78 cooperating in gripping a portion of the lower edge of the curtain fabric 66. The outer grip finger 77 projects upwardly from the slit 64 and has a pointed prong or pin 77a piercing through the curtain fabric 66. The lower grip finger 78 projects upwardly from the slit 64 and has an opening or hole 78a for receiving a tip end portion of the pin 77a.

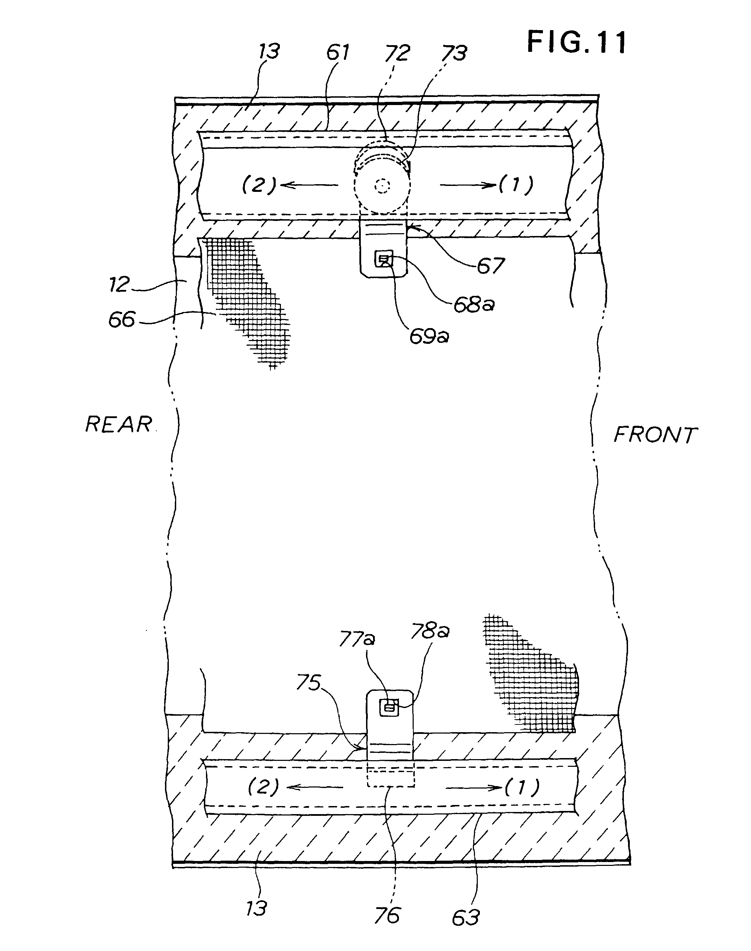

FIG. 11 is a view taken in the direction of the arrow XI of FIG. 10. As shown in FIG. 11, the upper guide rail 61 is bonded to the masking film layer 13 on the inside surface of the side door window glass 12 in parallel spaced relation to an upper edge of the window glass, the lower guide rail 63 is bonded to the masking film layer 13 on the inside surface of the side door window glass 12 in parallel spaced relation to the upper window glass edge, and the curtain fabric 66 is stretched between the upper and lower guide rails 61, 63 with its upper and lower edges gripped by the upper and lower sliders 67, 75, respectively.

The upper sliders 67 are movable by the outer and inner rollers 72, 73 along the upper guide rail 61 in opposite directions indicated by the arrows (1) and (2). Similarly, the lower sliders 75 are movable by the slider portions 76 along the lower guide rail 63 in the opposite directions indicated by the arrows (1) and (2).

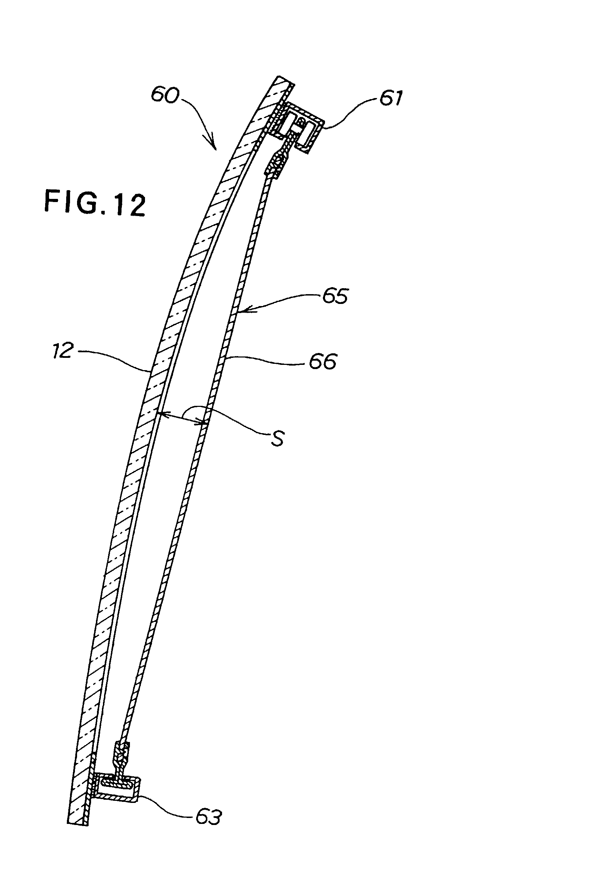

FIG. 12 is a cross-sectional view showing the overall structure of the curtain assembly 60 shown in FIG. 10. As shown in FIG. 12. the curtain fabric 66 has an inside surface which is spaced from the inside surface of the side door window glass 12 by the distance S. According to the present invention, the distance S is set in the range of 3 to 20 mm, and preferably this distance S is not greater than 15 mm.

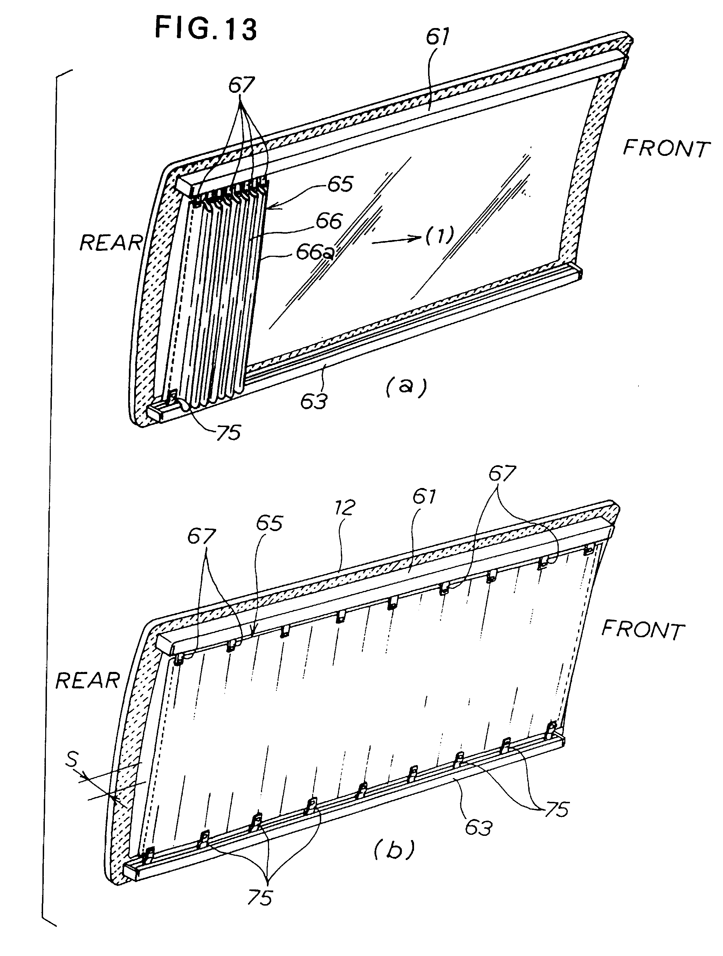

Operation of the curtain assembly 60 according to the fifth embodiment of the present invention will be described below with reference to FIGS. 13(a) and 13(b). FIGS. 13(a) and 13(b) show the curtain assembly when viewed from inside the vehicle.

In FIG. 13(a) the curtain 65 of the curtain assembly is shown as being disposed in its fully open position. When the curtain 65 is to be closed, a passenger of the vehicle pulls the curtain fabric 66 in the forward direction of the vehicle (indicated by the arrow (1)) while gripping a front side edge 66a of the curtain fabric 66. As the front side edge 66a is pulled in the direction of the arrow (1), the outer and inner rollers 72, 73 (FIG. 10) of the respective sliders 67 slide along the upper guide rail 61 in the direction of the arrow (1).

When the curtain 65 is fully closed as shown in FIG. 13(b), the inside surface of the side door window glass 12 and the inside surface of the curtain fabric 66 are spaced by a distance which, as described above with reference to FIG. 10, is in the range of 3 - 20 mm (and preferably, not greater than 15 mm). Since the distance S is small, nobody can look into the interior of the vehicle through a slit-like space provided between the inside surface of the window glass 12 and each side edge of the curtain fabric 66.

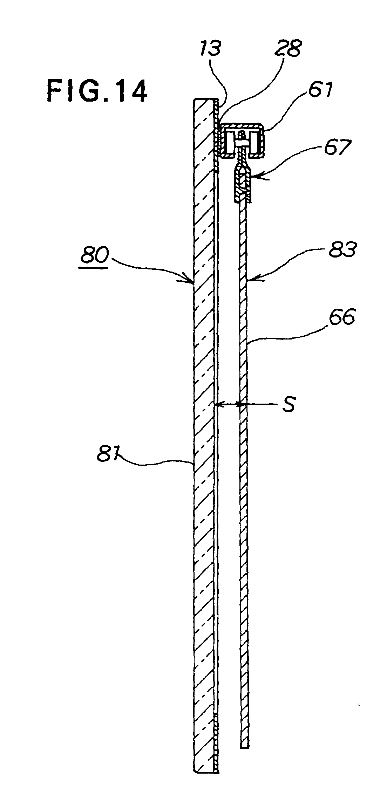

FIG. 14 shows in cross section a curtain assembly 80 according to a sixth embodiment of the present invention. In FIG. 14, those parts which are identical to those of the fifth embodiment are designated by the same reference characters, and a further description thereof can, therefore, be omitted.

The curtain assembly 80 includes a side door window glass 81, an upper guide rail 61 directly attached by bonding to an inside surface of the side door window glass 81 along an upper edge thereof, and a curtain 83 adapted to be opened and closed along the upper guide rail 81. The side door window glass 81 is a flat plate glass.

The curtain 83 is composed of a curtain fabric 66 so sized to cover substantially the entire are of the inside surface of the side door window glass 81 when the curtain 83 is closed, and a plurality of sliders 67 attached at regular intervals to an upper edge of the curtain fabric 66.

The curtain assembly 80 in this embodiment is characterized in that the curtain 83 is attached solely to the upper guide rail 61 without using a lower guide rail.

Since the upper guide rail 61 is directly bonded to the inside surface of the side door window glass 81, the distance S between the inside surface of the window glass 81 and an inside surface of the curtain fabric 66 is kept in the range of 3-20 mm, and preferably not greater than 15 mm.

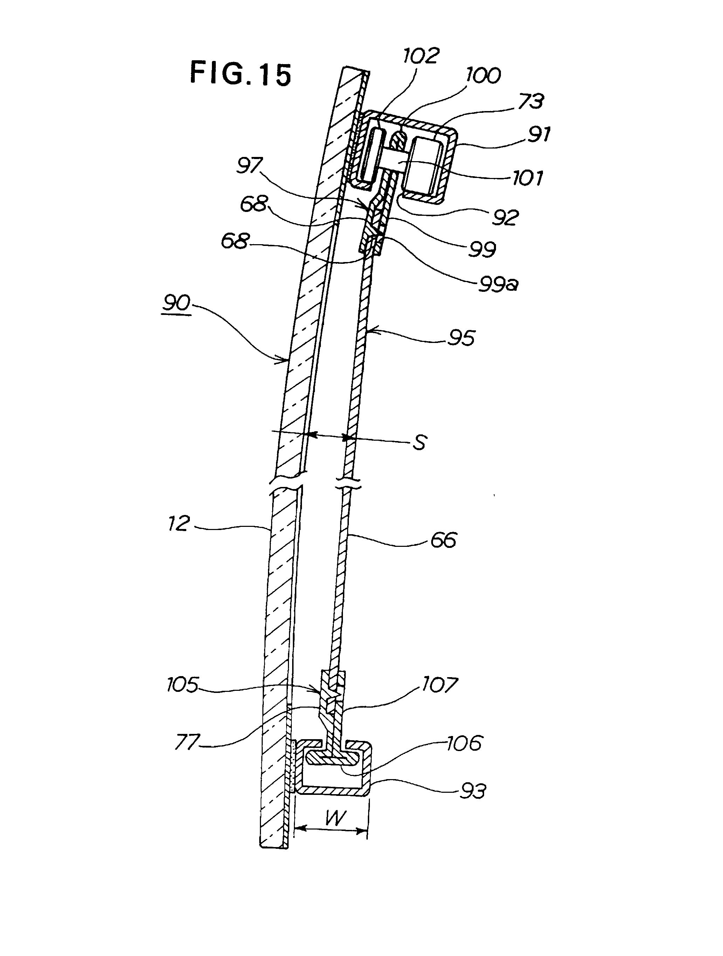

FIG. 15 shows in cross section a curtain assembly 90 according to a seventh embodiment of the present invention. In

FIG. 15, those parts which are identical to those of the fifth embodiment are designated by the same reference characters, and a further description thereof can, therefore, be omitted.

The curtain assembly 90 includes a side door window glass 12, an upper guide rail 91 directly attached by bonding to an inside surface of the side door window glass 12 along an upper edge thereof, a lower guide rail 93 directly attached by bonding to the inside surface of the side door window glass 12 along a lower edge thereof, and a curtain 95 adapted to be opened and closed along the upper and lower guide rails 91, 93.

The upper guide rail 61, as opposed to the upper guide rail 61 of the fifth embodiment shown in FIG. 10, has a slit 92 which is displaced or offset from a longitudinal central axis of the upper guide rail 61 toward the side door window glass 12. The lower guide rail 93 has a width W smaller than the width of the lower guide rail 63 of the fifth embodiment shown in FIG. 10.

The curtain 95 is composed of a curtain fabric 66 of a size large enough to cover substantially the entire are of the inside surface of the side door window glass 12 when the curtain 95 is closed, a plurality of upper sliders 97 attached at regular intervals to an upper edge of the curtain fabric 66, and a plurality of lower sliders 105 attached at regular intervals to a lower edge of the curtain fabric 66.

The upper sliders 97 each include an attachment member or clamp 100 structured to grip a portion of the upper edge of the curtain fabric 66 while keeping the upper edge of the curtain fabric 66 displaced or offset toward the inside surface of the window glass 12, a shaft 101 extending through the thickness of an upper portion of the clamp 100, an outer roller 102 and an inner roller 73 rotatably supported on opposite ends of the shaft 101 and received in the upper guide rail 91 for rolling movement along the upper guide rail 91.

The clamp 100 has an outer grip finger 68 bent outwardly toward the window glass 12, and an inner grip finger 99 extending straight. With the grip fingers 68, 99 thus configured, the upper edge of the curtain fabric 66 is displaced toward the inside surface of the window glass 12. The outer roller 102 has a smaller width than the inner roller 73 so that the upper edge of the curtain fabric 66 comes close to the inside surface of the window glass.

The lower sliders 105 are each composed of an inverted T-shaped member having a slider portion 106 slidably received in the lower guide rail 106, a pair of outer and inner grip fingers 77 and 107 cooperating in gripping a portion of the lower edge of the curtain fabric 66 such that the lower edge of the curtain fabric 66 is being displaced or offset from from the longitudinal central axis of the lower guide rail 93 toward the inside surface of the window glass 12. In order to displace the lower edge of the curtain fabric 66 toward the window glass 12, the inner grip finger 107 extends straight while the outer grip finger 77 is bent toward the window glass 12. In proportion to the reduction in width of the lower guide rail 93, the size of the lower sliders 105 is reduced too.

As described above, the curtain assembly 90 of this embodiment differs from the curtain assembly 60 of the fifth embodiment shown in FIG. 10 in that the curtain fabric 66 is gripped by and between the upper sliders 97 and the lower sliders 105 while it is being displaced or offset the longitudinal central axes of the guide rails 91, 93; the outer roller 102 of each upper slider 97 has a smaller width than the inner guide roller; and the slider portion 12 of each of the lower sliders 105 is reduced in size. By virtue of these differences, the distance S between the inside surface of the side door window glass 12 and the inside surface of the curtain fabric 66 is made smaller than the distance S of the curtain assembly 60 shown in FIG. 10.

Although the curtain assembly shown in each of the first to seventh embodiments is attached to the side door window glass or the roof window glass, the present invention should by no means be limited to the disclosed embodiments, but may include an application in which the curtain assembly is attached to the quarter window glass 4 shown in FIG. 1, a rear window glass and so forth.

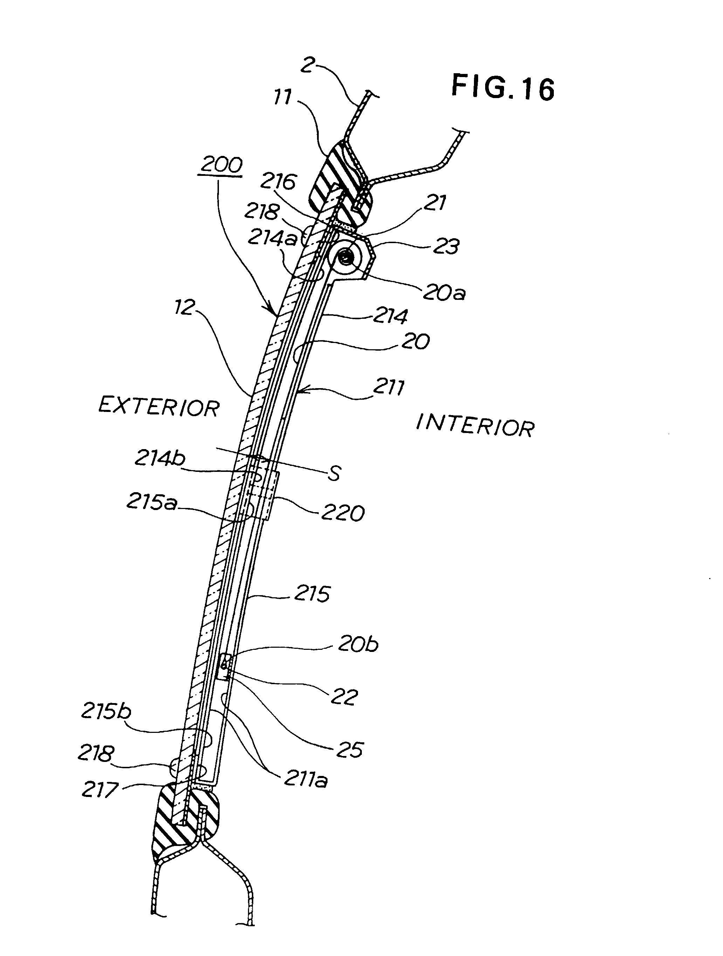

FIG. 16 is a cross-sectional view similar to FIG. 2, but showing a curtain assembly 200 according to an eighth embodiment of the present invention. In this figure, these parts which are identical to those of the first embodiment shown in FIG. 2 are designated by the same reference characters, and a further description thereof can, therefore, be omitted.

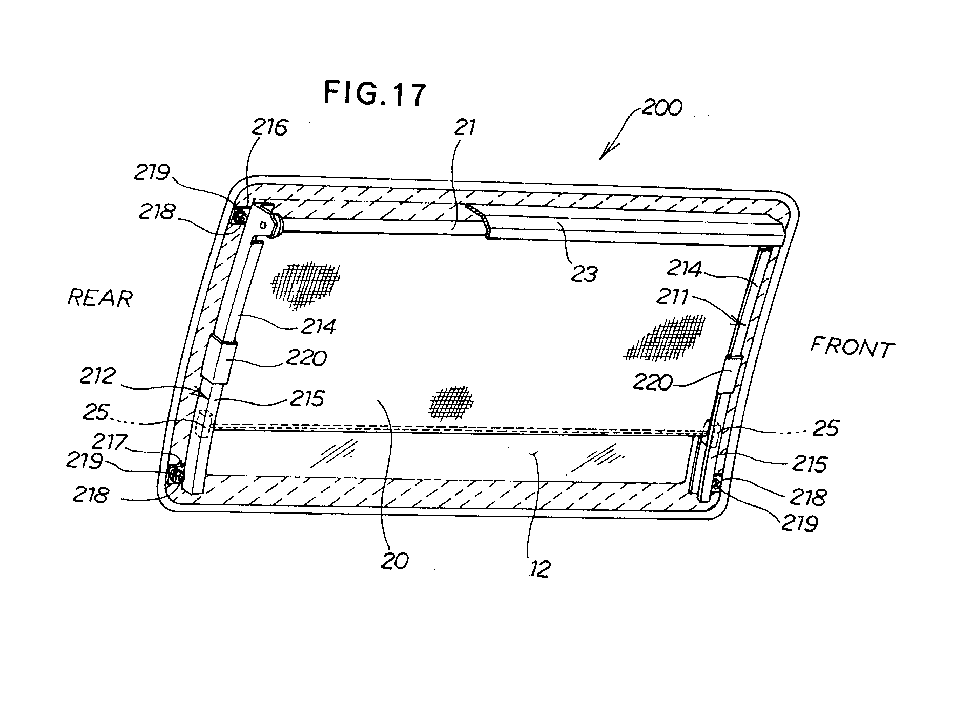

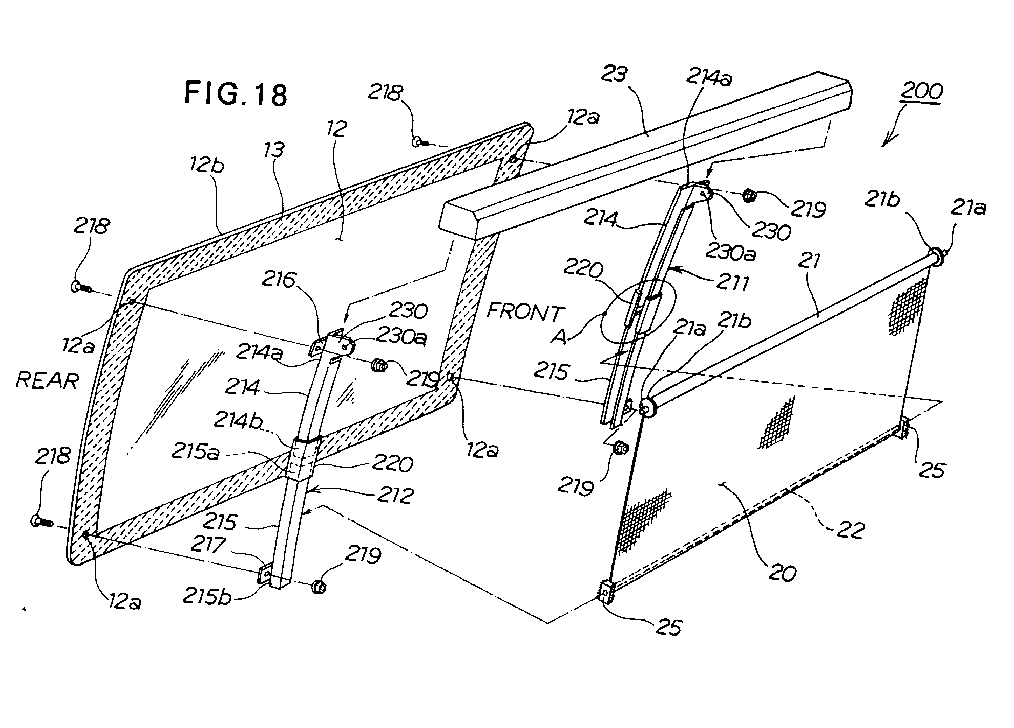

The curtain assembly 200 is comprised of a side door window glass 12 fixedly mounted within a window opening in a side door 2 via a gasket 11, a front guide rail 211 and a rear guide rail 212 (FIGS. 17 and 18) that are directly attached to an inside surface of the side door window glass 12 along its front and rear vertical edges, respectively, and a curtain 20 which can be opened and closed along the front and rear guide rails 211, 212.

As in the case of the first embodiment, the distance S between the inside surface of the window glass 12 and an inside surface of the curtain 213 is set to vary in the range of 3 - 20 mm, and this distance S is preferably not greater than 15 mm. With the distance S thus set, it is possible to disposed the curtain 213 closely to the window glass 12, thus posing more room or space available for the passenger of the vehicle or minivan 1 (FIG. 1).

In this embodiment, the front guide rail 211 is separated at its longitudinal central portion into an upper guide rail member (first guide rail member) 214 and a lower guide rail member (second guide rail member) 215. The first guide rail member 214 has a first attachment seat seat 216 attached by welding to an upper end portion 214a of the first guide rail member 214 for securing the first guide rail member 214 to the window glass 12. The first guide rail member 214 further has a lower end portion 214b received in a U-shaped guide member 220, the lower end portion 214b being secured by welding to the guide member 220. The second guide rail member 215 has an upper end portion 215a slidably received in the U-shaped guide member 220 so that the upper end portion 215a is movable within the guide member 220 in the longitudinal direction of the second guide rail member 215. The second guide rail member 215 further has a second attachment seat 217 attached by welding to a lower end portion of the second guide rail member 215 for securing the second guide rail member 215 to the window glass 12. The first and second attachment seats 216, 217 are each connected to the inside surface of the window glass 12 by means of a threaded fastener composed of a bolt 218 and a nut 219 (FIGS. 17 and 18).

The curtain 20 is structurally the same as the curtain of the first embodiment shown in FIG. 2 and has a pair of sliders 25, 25 (FIG. 17) smoothly slidable along opposed inside guide surfaces 211a, 211a of the front and rear guide rails 211, 212.

FIG. 17 shows in perspective -the curtain assembly 200 when viewed from inside the vehicle. As seen from FIG. 17, the front and rear guide rails 211, 212 each include a pair of vertically separated first and second guide rail members 214, 215 which is directly attached to the inside surface of the window glass 12 along a corresponding one of the front and rear vertical edge of the window glass 12 by means of the bolts 218 and nuts 219 that are fastened to the first and second attachment seats 216, 217.

FIG. 18 is a perspective view of the curtain assembly 20 according to the eighth embodiment of the present invention. As shown in this figure, the side door window glass 12 is a curved glass having a masking film layer 13 formed on the inside surface of the window glass 12 along a peripheral portion 12a thereof (including those areas in which the guide rails 211, 212 are disposed) for the purpose of shielding parts of the curtain assembly 200 from the light. The masking film layer 13 serves also as a cover for concealing the parts of the curtain assembly 200 from view taken from outside the vehicle.

The rear guide rail 212 has the same structure as the front guide rail 211 described above with reference to FIG. 16. The rear guide rail 212 is attached to the inside surface of the window glass 12 by securing the first and second attachment seats 216, 217 to the inside surface of the window glass 12 by means of two threaded fasteners each including a bolt 218 and a nut 219.

The front and rear guide rails 211, 212 each have a support flange 230 formed on the upper end portion 214a of the first rail 214. The support flange 230 has a bearing hole 230a rotatably receiving therein each of two coaxial support pins 21a, 21a formed integrally on the opposite ends of a winding shaft 21.

The winding shaft 21 in this embodiment has a wind-up unit (not shown) which is structurally and functionally the same as the wind-up unit described above with respect to the first embodiment.

In FIG. 18 reference numeral 12a denotes four holes formed in four corner portions of the window glass 12 for the passage therethrough of threaded shanks of the bolts 218.

FIG. 19A is an enlarged view of a portion indicated by a circle A in FIG. 18, and FIG. 19B is a cross-sectional view taken along line B-B of FIG. 19A.

The guide member 220 is channel shaped, as described above. The guide member 220 is welded to the first guide rail member 214 as at 222, 222, with the lower end portion 214b (FIG. 18) of the first guide rail member 214 being fitted in an upper portion 220a of the channel-shaped guide member 220. The upper end portion 215a (FIG. 18) of the second guide rail member 215 is slidably received in a lower portion 220 b of the guide member 220 so that the thus received upper end portion 215a is movable in the longitudinal direction of the second guide rail member 215. The first guide rail member 214 and the second guide rail member 215 is separated from one another by a space (thermal expansion allowance) 6 for taking up thermal expansion of the first and second guide rail members 214, 215. By properly setting the thermal expansion allowance 6 in the manner described later on, it is possible to take up the differential thermal expansion (difference in thermal expansion) between the front and rear guide rails 211 and the side door window glass 12.

The channel-shaped guide member 220 has a pair of side flanges 220c, 220c overlapped with a pair of side flanges 214c, 214c of the first guide rail member 214 and a pair of side flanges 215c, 215c of the second guide rail member 215, so that the first and second guide rail members 214, 215 are held in vertical alignment with each other by the guide member 220.

The thermal expansion allowance 6 provided in the form of a space is determined in the manner described below with reference to Table 1.

Table 1

| Material | Thermal Expansion Coefficient |
|---|---|
| soda-lime plate glass | $8.5 \times 10^{-6}$ °C$^{-1}$ |
| Fe | $11 \times 10^{-6}$ °C$^{-1}$ |
| Al | $23 \times 10^{-6}$ °C$^{-1}$ |
| ABS resin | $6 \sim 3 \times 10^{-6}$ °C$^{-1}$ |
| SUS304 | $17.3 \times 10^{-6}$ °C$^{-1}$ |
| Working Outside Temperature of Vehicle | $-10 \sim +40$°C |
| Inside Temperature | $+25$°C |
| Length of Guide Rail | 1000 mm |
| Maximum Temperature | 35°C |
| Difference $\Delta t$ max | |
| Differential Thermal | |
| Expansion $\Delta\delta$ | 0.51 mm |
| Thermal Expansion Allowance $\delta$ | $\delta > 0.51$ mm |

The guide rails may be made of metal such as iron (Fe), aluminum alloy (Al) or stainless steel (JIS (Japan Industrial Standards) SUS304, for example), or plastic such as ABS (acrylonitrile-butadiene-styrene) resin). These materials have respective thermal expansion coefficients as recited in Table 1, i.e., Fe=$11 \times 10^{-6}$ °C$^{-1}$, A1=$23 \times 10^{-6}$ °C$^{-1}$, ABS resin=$6 \sim 3 \times 10^{-6}$ °C$^{-1}$ and SUS304=$17.3 \times 10^{-6}$ °C$^{-1}$. On the other hand, soda-lime plate glass used as window glasses 12 has a thermal expansion coefficiency of $8.5 \times 10^{-6}$ °C$^{-1}$.

Given that the working outside temperature of the vehicle is $-10 \sim +40$°C, the inside temperature of the vehicle is $+25$°C, and the length of the guide rails is 1000 mm, a maximum difference ($\Delta t$ max) between the outside temperature and the inside temperature will be 35°C.

It appears from Table 1, guide rails made of Al have a grater thermal expansion coefficiency than other guide rails made of Fe, ABS resin or SUS304. Following description will be given of the manner in which the thermal expansion allowance $\delta$ is set for the Al guide rails.

Firstly, the differential thermal expansion (A$\delta$) between the Al guide rails and the side door window glass 12 formed from soda-lime plate glass is obtained by the following formula.

$$\Delta\delta = (23 \times 10^{-6} - 8.8 \times 10^{-6}) \times 1000 \times 35$$

$$= 0.51 \text{ mm}$$

The thermal expansion allowance $\delta$ is set greater than the differential thermal expansion $\Delta\delta$ so that a differential thermal expansion caused between the side door window glass 12 and the Al guide rails can be taken up by the thermal expansion allowance $\delta$ provided in the form of a space between the first guide rail member and the second guide rail member of each guide rail.

FIG. 20 is a perspective view showing a curtain assembly 240 when viewed from inside the vehicle 1 (FIG. 1) according to a ninth embodiment of the present invention. In FIG. 20, these parts which are identical to those of the first and eighth embodiments described above are designated by the same reference characters, and a further description thereof can, therefore be omitted.

The curtain assembly 240 includes a side door window glass 12, an upper guide rail 241 directly attached to an inside surface of the window glass 12 along an upper edge thereof, a lower guide rail 242 directly attached to the inside surface of the window glass 12 along a lower edge thereof, and a curtain 243 that can be opened and closed along the upper and lower guide rails 241, 242.

The upper guide rail 241 is separated at its longitudinal central portion into a rear guide rail member (first guide rail member) 246 and a front guide rail member (second guide rail member) 249. The upper guide rail 241 further has a channel-shaped guide member 247 used to join or couple the first and second guide rail members 246, 249. The first guide rail member 246 has an attachment seat 245 formed on a rear end portion 246a thereof for the attachment of the first guide rail member 246 to the inside surface of the window glass 12. A front end portion 246b of the first guide rail member 246 is received in the channel-shaped guide member 247 and firmly secured to this guide member 247. The second guide rail member 249 has a rear end portion 249a slidably received in the channel-shaped guide member 247 so that the rear end portion 249a is movable within the guide member 247 in the longitudinal direction of the second guide rail member 249. A front end portion 249b of the second guide rail member 249 has an attachment seat 248 for the attachment of the second guide rail member 249 to the inside surface of the window glass 12. The attachment seats 245, 248 are secured to the inside surface of the window glass 12 by means of two threaded fasteners each composed of a bolt 218 and a nut 219. Thus, the upper guide rail 241 is directly attached to the inside surface of the window glass 12.

The first and second guide rail members 246, 249 are formed from a channel-shaped light-weight section steel. The lower guide rail 242 has the same structure as the upper guide rail 241 except for its cross-sectional shape, and a further description of the lower guide rail member 242 can, therefore, be omitted.

FIG. 21 is a cross-sectional view taken along line XXI-XXI of FIG. 20. As will be understood from FIG. 21, the curtain 243 is comprised of a curtain fabric 243a capable of covering substantially the entire area of the inside surface of the window glass 12, a plurality of upper sliders 250 attached at regular intervals to an upper edge of the curtain fabric 243a, and a plurality of lower sliders 251 attached at regular intervals to a lower edge of the curtain fabric 243a.

The upper sliders 250 each include an attachment member or clamp 252 structured to grip a portion of the upper edge of the curtain fabric 243a, a shaft 253 extending through the thickness of an upper end portion of the clamp 252, a pair of outer and inner rollers 254, 254 rotatably supported on opposite ends of the shaft 253 and received in the upper guide rail 241 for rolling movement along the upper guide rail 241. The clamp 254 has a pointed prong or pin 255 penetrating through the curtain fabric 243a to keep the upper edge portion of the curtain fabric 243a in position against detachment from the clamp 254.

The lower sliders 250 have an inverted T-shaped configuration and each include a slider portion 256 slidably received in the lower guide rail 242, and an attachment portion or clamp 257 structured to grip a portion of the lower edge of the curtain fabric 243a. The clamp 257 of the lower slider is substantially the same in construction as the clamp 252 of the upper slider 250.

FIG. 22 is a cross-sectional view in the direction of the arrow XXII-XXII of FIG. 20. As shown in FIG. 22, the guide member 247 has a rear end portion joined by welding to the front end portion 246b of the first guide rail member 246 as at 247a. Thus, the first guide rail member 246 and the guide member 247 are fixedly connected together. The guide member 247 has a front end portion in which the rear end portion 249a of the second guide rail member 249 is slidably received. The guide member 247 is movable relative to the second guide rail member 249 in the longitudinal direction of the guide rail members 246, 249. The first guide rail member 246 and the second guide rail member 249 are separated from each other by a space (thermal expansion allowance) δ which is determined in the same manner as the eighth embodiment described above. With the thermal expansion allowance δ thus provided, the differential thermal expansion between the upper guide rail 241 and the side door window glass 12 can be taken up. The channel-shaped guide member 247 has a pair of side flanges 247b, 247b overlapping two opposed side flanges of the first guide rail member 246 and opposed side flanges of the second guide rail member 249. With this arrangement, the first guide rail member 246 and the second guide rail member 249 are held in horizontal alignment with each other by the guide member 247.

FIG. 23 is a perspective view showing a curtain assembly 260 according to a tenth embodiment of the present invention. In FIG. 23, these parts which are identical to those of the first and eighth embodiments described above are designated by the same reference characters, and a further description thereof can, therefore, be omitted.

The curtain assembly 260 includes a side door window glass 12, a front guide rail 261 and a rear guide rail (not shown but substantially the same in construction as the front guide rail 261) that are directly attached to an inside surface of the window glass 12 along its front and rear vertical edges, respectively, and a curtain 20 that can be opened and closed along the front and rear guide rails 261.

The front guide rail 261 is composed of a vertically disposed elongated rail body 262, a first attachment seat 263 attached by welding to an upper end portion 262a of the rail body 262, and a second attachment seat 264 attached to a lower end portion 262b of the rail body 262. The first and second attachment portions 263, 264 are secured to the inside surface of the window glass 12 by means of a pair of threaded fasteners each composed of a bolt 218 and a nut 219 so that the front guide rail 261 is attached to the window glass 12.

The second attachment seat 264 has an elongated hole 264a extending parallel to a longitudinal axis of the rail body 262. The elongated hole 264a has an effective length (length of a straight portion of the elongated hole 264a) which is twice as large as the thermal expansion allowance δ. The bolt 218 is disposed at a longitudinal central portion of the elongated hole 264a, as shown in FIG. 23. The thermal expansion allowance δ is equal in amount to the thermal expansion allowance δ of the eighth embodiment and provided to accommodate or take up a thermal deformation of the rail body 262 produced when the rail body 262 is thermally expanded or contracted. With the thermal expansion allowance δ thus provided, it is possible to take up a difference in thermal expansion between the front guide rail 261 and the window glass 12.

FIG. 24 is a cross-sectional view taken along line XXIV-XXIV of FIG. 23, the view showing the condition in which the bolt 218 extends successively through a hole 12a in the window glass 12 and through the elongated hole 264a in the second attachment seat 264 attached to the lower end portion 262b of the rail body 262, and the nut 219 is threaded over the bolt 218 to secure the second attachment seat 264 to the inside surface of the window glass 12.

FIG. 25 is a perspective view of a curtain assembly 270 when viewed from inside the vehicle according to an eleventh embodiment of the present invention. In FIG. 25 these parts which are identical to those of the ninth embodiment described above are designated by the same reference characters, and a further description thereof can, therefore, be omitted.

The curtain assembly 270 includes a side door window glass 12, an upper guide rail 271 directly attached to an inside surface of the window glass 12 along an upper edge thereof, a lower guide rail 272 directly attached to the inside surface of the window glass 12 along a lower edge thereof, and a curtain 243 that can be opened and closed along the upper and lower guide rails 271, 272.

The upper guide rail 271 is composed of a horizontally disposed elongated rail body 273, a first attachment seat 274 attached to a front end portion 273a of the rail body 273, and a second attachment seat 275 attached to a rear end portion 273b of the rail body 273. The first and second attachment portions 274, 275 are secured to the inside surface of the window glass 12 by means of a pair of threaded fasteners each composed of a bolt 218 and a nut 219 so that the upper guide rail 271 is attached to the window glass 12. The lower guide rail 272 has the same structure as the upper guide rail 271 except its cross-sectional shape, and no further description is needed, accordingly.

The second attachment seat 275 has an elongated hole 275a extending parallel to a longitudinal axis of the rail body 273. The elongated hole 275a has an effective length (length of a straight portion of the elongated hole 264a) which is twice as large as the thermal expansion allowance $\delta$. The bolt 218 is disposed at a longitudinal central portion of the elongated hole 275a. The thermal expansion allowance $\delta$ is equal in amount to the thermal expansion allowance $\delta$ of the eighth embodiment and provided to accommodate or take up a thermal deformation of the rail body 273 produced when the rail body 273 undergoes thermally expansion or thermal contraction. With the thermal expansion allowance 6 thus provided, it is possible to take up the differential thermal expansion between the upper guide rail 271 and the window glass 12.

FIG. 26 is a perspective view of a curtain assembly 280 when viewed from inside the vehicle according to a twelfth embodiment of the present invention. In FIG. 26 these parts which are identical to those of the ninth embodiment described above are designated by the same reference characters, and a further description thereof can, therefore, be omitted.

The curtain assembly 280 is characterized in that each of the upper guide rail 281 and the lower guide rail 282 is attached at its central portion to the inside surface of a side door window glass 12 by means of a threaded fastener composed of a bolt 218 and a nut 219, and opposite ends of each guide rail 281, 282 are attached by bonding to the inside surface of the window glass 12 via a pair of elastic members 285, 285, respectively.

More specifically, the upper guide rail 281 is composed of a horizontally disposed elongated rail body 283, an attachment seat 284 attached to a central portion 283a of the rail body 283, and the elastic members 285, 285 attached by bonding to a rear end portion 283b and a front end portion 283c of the rail body 283, respectively. The attachment seat 284 is secured to the inside surface of the window glass 12 by means of the bolt 218 and nut 219 so that the upper guide rail 281 is firmly connected to the window glass 12. The front and rear end portions 283c, 283b of the upper guide rail 281 are bonded to the inside surface of the window glass 12 via the elastic members 285, 285.

The lower guide rail 282 has the same structure as the upper guide rail 281 except its cross-sectional shape, and no further description is needed, accordingly.

The elastic members 288 are elastically deformable so that the side door window glass 12, the upper guide rail 281, and the lower guide rail 282 are allowed to expand and contract independently from one another. This means that a difference in thermal expansion between the window glass 12 and the upper and lower guide rails 281, 282 is taken up via elastic deformation of the elastic members 285.

Since each of the upper and lower guide rails 281, 282 is bonded at its opposite ends to the inside surface of the window glass 12 via the elastic members 285, it is prevented from rotating about an axis of the bolt 218.

FIG. 27A is a cross-sectional view taken along line A-A of FIG. 26, and FIG. 27B is a cross-sectional view taken along line B-B of FIG. 26.

As shown in FIG. 27A, the rear end portions of the respective guide rails 281, 282 are each attached by adhesive bonding to the inside surface of the window glass 12 with the elastic member 285 disposed between the rear end portion and the window glass 12. For adhesive bonding, an adhesive 286 (better shown in FIG. 28A) is used to bond or join the rear end portion of each guide rail 281, 282 and the elastic member 285 and join the elastic member 285 and the window glass 12.

The window glass 12 has a masking film layer 13 applied to the inside surface of a peripheral portion 12b of the window glass 12. The masking film layer 13 shields the elastic members 285 from the light coming from outside the vehicle and thus protects the elastic members 285 from deterioration by ultraviolet rays. The masking film layer 13 is a film containing a black ceramic pigment, for example.

FIG. 27B shows the condition in which the upper and lower guide rails 281, 282 are attached at their central portion to the inside surface of the window glass 12 via the attachment seats 284, 284 secured to the window glass 12 by the threaded fasteners composed of the bolts 218, 218 and the nuts 219, 219.

FIGS. 28A and 28B are enlarged views showing the relationship between the window glass 12, the upper guide rail 281 and the elastic member 285.

FIG. 28A shows the initial condition in which the upper guide rail 281 is attached by the adhesive 285 to the inside surface of the window glass 12 with the elastic member 285 disposed therebetween.

FIG. 28B illustrates the condition in which the elastic member 285 undergoes elastic deformation to take up the differential thermal expansion between the window glass 12 and the upper guide rail 281. The thermal expansion allowance 6 provided in the form of a predetermined amount of elastic deformation of the elastic member 285 is determined in the same manner as the eight embodiment described above.

In the twelfth embodiment just described above, the upper and lower guide rails 281, 282 are firmly secured at their central portion to the inside surface of the window glass 12 by means of the threaded fasteners (bolts and nuts 218 and 219) while the opposite end portions of each guide rail 281, 282 are bonded to the inside surface of the window glass 12 with the elastic members 285 disposed therebetween. The present invention should by no means be limited to the illustrated embodiment, but may include an application in which only one end portion of each guide rail 281, 282 is attached by adhesive bonding to the inside surface of the window glass 12 with the elastic member 285 disposed therebetween. In this application, the same effect as described above can be attained.

The upper and lower guide rails 281, 282 used in the twelfth embodiment are each secured at its central portion to the inside surface of the window glass 12 via the bolt 218, with its opposite end portions bonded to the inside surface of the window glass 12 via the elastic member 285. This arrangement should be construed as illustrative rather than as restrictive. According to the present invention, a portion of the guide rails 281, 282 to be secured by a threaded fastener 218, 219 to the window glass 12 and a portion of the guide rails 281, 282 to be bonded to the window glass 12 via the elastic member 285 may be changed to any other position. The number of the aforesaid portion to be bonded may be one rather than two as in the illustrated embodiment.

Although the guide rails 281, 282 in the twelfth embodiment shown in FIG. 26 are disposed horizontally, they may be disposed vertically along front and rear edges of the window glass 12.

FIG. 29 is a perspective view showing a curtain assembly 290 when viewed from inside the vehicle according to a thirteenth embodiment of the present invention. In FIG. 29 these parts which are identical to those of the twelfth embodiment described above are designated by the same reference characters, and a further description thereof can, therefore, be omitted.

The curtain assembly 290 is characterized in that a pair of plate springs 291, 291 is attached to opposite end portions of each of the upper and lower guide rails 281, 282, and the plate springs 291, 291 have hook-shaped clamp fingers 291a, 291a hooked on opposite vertical edges 12c, 12c of a side door window glass 12 to attach the guide rail 281, 282 to an inside surface of the window glass 12.

FIG. 30 is a view in the direction of the arrow XXX shown in FIG. 29, the view showing the condition in which the hook-shaped clamp fingers 291a, 291a of the respective plate springs 291, 291 attached to the opposite end portions of the upper guide rail 280 are hooked on the opposite vertical edges 12c, 12c of the window glass 12. Since the clamp fingers 291a, 291a firmly grip the opposite vertical edges 12c, 12c of the window glass 12, the upper guide rail 281 is held in position against rotation about an axis of a bolt 218 which is used to attach a central portion of the upper guide rail 280 to the window glass 12.

FIGS. 31(a) and 31(b) are views illustrative of the operation of the curtain assembly 290 according to the thirteenth embodiment of the invention.

As shown in FIG. 31(a), when the upper guide rail 281 undergoes thermal expansion in the direction of the arrow (1), the hook-shaped clamp finger 291a of the plate spring 291 is allowed to contract or deform inwardly by its own resiliency. Despite the deformation, the clamp finger 291a of the spring plate 291 still has a resilient force large enough to retain the mating vertical edge 12c of the window glass 12.

When the upper guide rail 281 undergoes thermal contraction or shrinkage in the direction of the arrow (2) in FIG. 31(b), the hook-shaped clamp finger 291a of the plate spring 291 is forced to deform outwardly against its own resiliency. Under such deformed condition, the clamp finger 291a of the spring plate 291 still has a resilient force large enough to retain the mating vertical edge 12c of the window glass 12.

By virtue of the resilient deformation of the spring plate 291 (and the hook-shaped clamp finger 291, in particular), the differential thermal expansion between the window glass 12 and the upper guide rail 281 can be taken up. The thermal expansion allowance 6 provided in the form of a predetermined amount of resilient deformation of the plate spring 291 is determined in the same manner as the eight embodiment described above.

In the thirteenth embodiment just described above, the plate spring 291 having a hook-shaped clamp finger 291a is attached to the opposite end portions of each of the upper and lower guide rails 281, 282, and the clamp finger 291a is hooked on a vertical edge of the window glass 12 to attach the guide rail to the inside surface of the window glass 12. The present invention should by no means be limited to the illustrated embodiment, but may include an modification in which the plate spring 291 is attached to only one end portion of each guide rail 281, 282 to retain an edge of the window glass 12 by the hook-shape clamp finger 291a. In this case, the same effect as described above can be attained.

The upper and lower guide rails 281, 282 used in the thirteenth embodiment are each secured at its central portion to the inside surface of the window glass 12 via a bolt 218, with its opposite end portions retained on the inside surface of the window glass 12 via the plate springs 291 hooked or clamped on the opposite edges 12c, 12c of the window glass 12. This arrangement should be construed as illustrative rather than as restrictive. According to the present invention, a portion of the guide rails 281, 282 to be secured by a threaded fastener 218, 219 to the window glass 12 and a portion of the guide rails 281, 282 to which the plate spring 291 is attached may be changed to any other position. The number of the plate spring 291 may be one rather than two as in the illustrated embodiment.

Although the guide rails 281, 282 in the twelfth embodiment shown in FIG. 26 are disposed horizontally, they may be disposed vertically along front and rear edges of the window glass 12.

FIG. 32 shows a first modification of the curtain assembly 290 described above with respect to the thirteenth embodiment shown in FIG. 29. The modified curtain assembly includes a pair of channel-shaped stoppers 292, 292 attached by bonding to the inside surface of a window glass 12 in such a manner that opposite end portions of an upper guide rail 281 are slidably received in the stoppers 292, 292 while keeping an appropriate thermal expansion allowance δ therebetween to take up the differential thermal expansion between the window glass 12 and the upper guide rail 281. The thermal expansion allowance δ is provided in the form of a space defined between the bottom surface of each channel-shaped stopper 292 and an end face of the corresponding end portion of the upper guide rail 281. Since the opposite end portions of the upper guide rail 281 are received in and supported by the stoppers 292, 292, the upper guide rail 281 is kept free from rotation about an axis of a bolt 218 which is used to secure a central portion of the upper guide rail 281 to the inside surface of the window glass 12.

Though not shown, the same stopper 292 is associated with each end of the lower guide rail.

FIG. 33 shows a second modification of the curtain assembly 290 described above with respect to the thirteenth embodiment shown in FIG. 29. The modified curtain assembly includes a pair of channel-shaped stoppers 293, 293 attached by bonding to the inside surface of a window glass 12 in such a manner that a pair of coaxial lugs 294, 294 projecting from opposite end faces of an upper guide rail 281 is slidably received in the stoppers 293, 293, respectively, while keeping an appropriate thermal expansion allowance δ therebetween to take up the differential thermal expansion between the window glass 12 and the upper guide rail 281. The thermal expansion allowance δ is provided in the form of a space defined between the bottom surface of each channel-shaped stopper 292 and an end face of the corresponding axial lug 294 on the upper guide rail 281. Since the lugs 294, 294 are at least partly received in and supported by the stoppers 293, 293, the upper guide rail 281 is kept free from rotation about an axis of a bolt 218 which is used to secure a central portion of the upper guide rail 281 to the inside surface of the window glass 12.

Though not shown, the modified curtain assembly also has a lower guide rail having the same lugs as described above, and the same stopper 293 as described above is associated with each of the lugs on the lower guide rail.

According to the first and second modifications described above, the stopper 292 or 293 is associated with both ends of the guide rail. Though not shown, the stopper 292, 293 may be associated with only one end of the guide rail.

In the first and second modifications described above, the upper and lower guide rails (only the upper guide rail 281 being shown) are each secured at its central portion to the inside surface of the window glass 12 via the bolt 218, with its opposite end portions (including the axial lugs 294) being slidably received in the channel-shaped stoppers 292; 293 attached to the inside surface of the window glass 12. This arrangement should be construed as illustrative rather than as restrictive. According to the present invention, a portion of the guide rails 281, 282 to be secured by a threaded fastener 218, 219 to the window glass 12 and the position of the stoppers 292; 293 may be changed to any other position. The number of the stopper 292; 293 may be one rather than two as in the illustrated modifications.

Although the guide rail 281 in the illustrated first and second modifications shown in FIGS. 32 and 33 is disposed horizontally, it may be disposed vertically along a vertical edge of the window glass 12.

FIG. 34 is a fragmentary cross-sectional view showing a curtain assembly 300 according to a fourteenth embodiment of the present invention. In FIG. 34 these parts which are identical to those of the twelfth embodiment described above with reference to FIG. 26 are designated by the same reference characters, and a further description thereof can, therefore, be omitted.

The curtain assembly 300 is characterized in that a channel-shaped upper guide rail 301 and a channel-shaped lower guide rail (not shown but have the same structure as the upper guide rail 301) are each bonded at the entire area of its reverse side (facing exteriorly of the vehicle) to the inside surface of a side door window glass 12, with an elongated strip-like elastic member 302 disposed between the window glass 12 and each of the upper and lower guide rails. The elongated strip-like elastic member 320 is substantially the same in size as the reverse side (i.e., a lower side flange) of the guide rails.

In FIG. 34, reference numeral 303 denotes an adhesive used to bond or join the elastic member 302 to the window glass 12 and the upper guide rail 301.

With this arrangement, since the elastic member 302 is elastically deformable, the window glass 12 and the upper guide rail 301 are allowed to expand and contract independently from each other. This means that the differential thermal expansion between the window glass 12 and the upper guide rail 301 is taken up via elastic deformation of the elastic member 302.

The window glass 12 has a masking film layer 13 applied to the inside surface of a peripheral portion 12b of the window glass 12. The masking film layer 13 shields the adhesive 303 and the elastic members 303, 302 from the light coming from outside the vehicle and thus protects the adhesive 303 and the elastic members 302 from deterioration by ultraviolet rays. The masking film layer 13 is a film containing a black ceramic pigment, for example.

Although in the fourteenth embodiment just described above, the upper guide rail 301 and the non-illustrated lower guide rail are disposed horizontally, they may be disposed vertically along front and rear edges of the window glass 12.

FIG. 35 is an exploded perspective view showing a curtain assembly 310 according to a fifteenth embodiment of the present invention. In FIG. 35 these parts which are identical to those of the eighth embodiment described above with reference to FIG. 17 are designated by the same reference characters, and a further description thereof can, therefore, be omitted.

The curtain assembly 310 is characterized in that an elongated cover member 311 has a rear end fixedly connected to an upper end of a rear guide rail 212, the front end of the cover member 311 being slidably connected to a winding shaft 318 (FIG. 36A) via a side cover 312.

FIG. 36A is a cross-sectional view of a main portion of the curtain assembly 310, and FIG. 36B is a view in the direction of the arrow B shown in FIG. 36A.

As shown in FIG. 36A, the wind-up mechanism 313 of the curtain assembly 310 generally comprises a tubular winding drum 315 on which a curtain fabric 314 is wound, a lock member 317 rotatably mounted on a rear end of the winding drum 315 via a bearing 316, the winding shaft 318 rotatably mounted on a front end of the winding drum 315 via a similar bearing 316, a connecting tube 319 firmly connected at one end (front end) to the winding shaft 318, a rotating member 320 rotatably mounted on the other end (rear end) of the connecting tube 319 and firmly connected to an intermediate portion of the winding drum 315, and a coiled rewind spring 321 firmly connected at one end (front end) to the winding shaft 318 and, at the other end (rear end), to the rotating member 320.

The winding shaft 318 has a front end portion 318a of hexagonal cross section which is fitted in a hexagonal hole 230b formed in an enlarged portion or flange 230 of the front guide rail 211, as shown in FIG. 36B. The hexagonal hole 230b prevents rotation of the winding shaft 318 while allowing axial movement of the winding shaft 318. Since the winding shaft 318 is movable in the axial direction thereof, as indicated by the arrowheads shown in FIG. 36A, it is possible to take up a thermal deformation (contraction and expansion) of the winding drum 315.

The wind-up mechanism 313 of the foregoing construction operates as follows. When the curtain fabric 314 is pulled downwards, the winding drum 315 rotates in the clockwise direction in FIG. 36B and thus allows the curtain fabric 314 to be unwound from the winding drum 315. Clockwise rotation of the winding drum 315 causes the coiled rewind spring 321 to be uncoiled from its rear end side. When the curtain fabric 314 is pulled down to a desired position, a shaft 322 firmly connected at one end (front end) to the winding drum 315 is locked by the lock member 317 in position against rotation together with the winding drum 315. Thus, the clockwise rotation of the winding drum 315 is stopped.

When the curtain fabric 314 is to be wound up on the winding drum 315, the lock member 317 releases the lock on the shaft 322, whereupon the partly unwound coiled return spring 321 springs back to restore its original shape, thereby forcing the winding drum 315 to rotate in the counterclockwise direction in FIG. 36B to rewind the curtain fabric 314 around the winding drum 315.

The cover member 311, as described above, has a rear end fixedly connected to the upper end of the rear guide rail 212 and a rear end slidably connected to the winding shaft 318 via the side cover 312. The side cover 312 is supported on the winding shaft 318 and movable in the axial direction of the winding shaft 312, as indicated by the arrowheads shown in FIG. 36A. The side cover 312 is positioned such that a space defined between the side cover 312 and the winding drum 315 provides a thermal expansion allowance 6, and a space defined between the side cover 312 and the front guide rail 211 provides a similar thermal expansion allowance 6. The amount of the thermal expansion allowance 6 is determined in the same manner as described above with respect to the eighth embodiment shown in FIG. 16.

In the curtain assembly 310, since the front end of the cover member 311 is slidably connected to the winding shaft 318 via the side cover 312, the cover member 311 and the side door window glass 12 are thermally expandable and contractible independently from each other. This means that the differential thermal expansion between the window glass 12 and the cover member 311 can be taken up by the movement of the side cover 312 relative to the front guide rail 211. Thus, the cover member 311 and the window glass 12 are free from thermal stresses which would otherwise result in thermal deformation of the cover member 311.

FIG. 37 is a perspective view showing a curtain assembly 330 according to a sixteenth embodiment of the present invention. In FIG. 37 these parts which are identical to those of the eighth embodiment described above with reference to FIG. 17 are designated by the same reference characters, and a further description thereof can, therefore, be omitted.

The curtain assembly 330 is characterized in that a cover member 331 has one end (rear end) fixedly connected to a rear guide rail 212, and the other end (front end) slidably connected to a front guide rail 221.

To this end, the curtain assembly 330 has an attachment strip 332 projecting horizontally and outwardly from an upper end of the rear guide rail 212, and an attachment strip 333 projecting horizontally and outwardly from an upper end of the front guide rail 211. The cover member 331 is attached to the attachment strips 332, 333 by means of two threaded fasteners each composed of a bolt 334 and a nut 335.

The attachment strips 332, 333 each have a circular hole 333 for the passage therethrough of a threaded shank of the bolt 334. The cover member 331 has a circular hole 337 formed at a rear end portion thereof for the passage therethrough of the threaded shank of the bolt 334, and an elongated hole 338 formed at a front end portion thereof for the passage therethrough of the threaded shank of the bolt 334.

FIG. 38 is a cross-sectional view showing a portion of the curtain assembly 330 shown in FIG. 37. As shown in FIG. 38, the cover member 331 is attached to the attachment member 332 on the rear guide rail 212 and to the attachment member 333 on the front guide rail 211 by means of the threaded fasteners (bolts 334 and nuts 335). The elongated hole 338 extends in the longitudinal direction of the cover member 331 and has an effective length (length of the elongate hole 338 excluding round end portions thereof) which is twice as large as the thermal expansion allowance $\delta$. The bolt 334 is disposed at the center of the elongated hole 338 so that the thermal expansion allowance $\delta$ is provided to deal with both the thermal expansion of the cover member 331 and the thermal contraction of the cover member 331.

According to the curtain assembly 330 of the foregoing construction, the differential thermal expansion between the cover member 311 and the side door window glass 12 can be taken up, and so the cover member 311 and the window glass 12 are free from thermal stresses and thermal deformation resulting therefrom.

FIG. 39 is a partly cross-sectional view showing a main portion of a curtain assembly 340 according to a seventeenth embodiment of the present invention.

The curtain assembly 340 differs from the curtain assembly 330 shown in FIGS. 37 and 38 in that opposite end portions (front and rear end portions) of a cover plate 341 are attached by adhesive bonding to an upper end of a front guide rail 211 and an upper end of a rear guide rail 212, respectively, via a pair of elastic members 342, 342.

More specifically, the curtain assembly 340 has an attachment strip 343 projecting horizontally and outwardly from the upper end of the front guide rail 211, and an attachment strip 344 projecting horizontally and outwardly from the upper end of the rear guide rail 212. Each of the attachment strips 343, 344 is bonded to the cover member 341 with one of the elastic members 342, 342 disposed between the attachment strip 342, 344 and the cover member 341.

FIGS. 40A and 40B are views illustrative of the operation of the seventeenth embodiment shown in FIG. 39. The thermal expansion allowance $\delta$ is determined in the same manner as described above with respect to the eight embodiment shown in FIGS. 16 - 19B.

FIG. 40A illustrates the manner in which the elastic member 342 takes up or absorb the differential thermal expansion produced between the cover member 341 and the side door window glass 12 (FIG. 39) when the cover member 341 undergoes thermal expansion in the direction of the arrow.

FIG. 40B illustrates the manner in which the elastic member 342 takes up or absorb the differential thermal expansion produced between the cover member 341 and the side door window glass 12 (FIG. 39) when the cover member 341 undergoes thermal shrinkage in the direction of the arrow.

Although the curtain assemblies of the eighth to seventeenth embodiments are so constructed as to fit the side door window glass 12 of the vehicle 1 (FIG. 1), they may be used in combination with any other window glass of the vehicle such as the quarter window glass 4 shown in FIG. 1 or a rear window glass.

The curtain assemblies of the foregoing embodiments include a window glass curved in the vertical direction of the vehicle. As will be understood from the following description, the present invention may be practiced when embodied in a curtain assembly designed for use in combination with a window glass curving in the horizontal direction.

FIG. 41 shows in perspective a minivan 400 having a rear window glass 402 fixedly mounted with a rear window opening in a vehicle body 401, and a curtain assembly 410 associated with a rear window of the minivan 1. The rear window glass 402 is a curved glass curving outwardly not only in the horizontal direction but also in the vertical direction. The curved rear window glass 402 forms a part of the curtain assembly 410. In FIG. 41 a front side glass is denoted by 403, and two side window glasses are denoted by 404 and 405, respectively.

FIG. 42 is an exploded perspective view of the curtain assembly 410 according to an eighteenth embodiment of the present invention.

The curtain assembly 410 is a roll curtain assembly including a left guide rail 411 and a right guide rail 412 that are directly attached to an inside surface of the rear window glass 402, and a curtain unit 430 that can be opened and closed along the left and right guide rails 411, 412.

The rear window glass 402 curves outwardly when viewed from above and also when viewed from the side of the window glass 402. The rear window glass 402 has a masking layer 406 applied to an inside surface of the window glass 402 along an outer peripheral edge portion 402a (including those areas adapted to be bonded to the guide rails 411, 412).

The masking layer 406 is a film formed from the same material as the masking film layer 13 of the first embodiment shown in FIG. 5. The masking film layer 406 is provided mainly for the purpose of concealing parts of the curtain assembly 410 (including the guide rails 411, 412) from view taken from outside the vehicle (minivan) 400.

The guide rails 411, 422 are curved so as to fit the curvature of the inside surface of the rear window glass 402. The guide rails 411, 412 are attached to the masking film layer 406 on the inside surface of the rear window glass 402 by means of two pairs of threaded fasteners, each fastener being composed of a bolt 414 and a nut 415 that are used to secure an end of each guide rail 411, 412 to the rear window glass 402. Each of the guide rails 411, 412 has an enlarged portion or flange 416, 417 at its upper end.

FIG. 43 illustrate the general construction of the curtain unit 430. The illustrated curtain unit 430 includes a fixed or stationary shaft 432 curved or bent into a desired configuration, a plurality of annular flanges 433 formed or otherwise mounted at regular intervals on the stationary shaft 432, a flexible tubular winding drum 434 rotatably mounted on the annular flanges 433, and a curtain fabric 435 releasably wound on the winding drum 434. Reference numeral 436 denotes a round bar or rod attached to a lower end of the curtain fabric 435. Designated by 436a, 436a are sliders attached to the opposite ends of the rod 436. The sliders 436a, 436a are slidably received in guide grooves 411a, 412a (FIG. 42) of the respective guide rails 411, 412 so that they are moved up and down along the guide grooves 411a, 412a in immediate response to vertical movement of the curtain fabric 435. The stationary shaft 432 is rotatably mounted on the flanges 416, 417 (FIG. 42) of the guide rails 411, 412.

The curtain fabric 435 is a flexible sheet-like member having a light-absorbing capacity, a light shielding capability, and a sound absorbing quality so that the tone of light and the amount of radiant energies, such as light, heat and sound can be controlled. The curtain fabric 435 may have a detachable structure to facilitate replacement with another curtain fabric when the existing curtain fabric is damaged or when a different material or design pattern is required to meet application requirements.

FIG. 44(a) is a cross-sectional view taken along line A-A of FIG. 43, and FIG. 44(b) is a cross-sectional view taken along line B-B of FIG. 43.

As shown in FIG. 44(a), the annular flanges 433 fixedly mounted on the stationary shaft 432 for guiding therearound the winding drum 434 have a radius r1. The winding drum 434 is rotatably mounted on the flanges 433. With this arrangement, if the illustrated portion of the curtain fabric 435 is pulled downwards in the direction of the arrow (1) while keeping the stationary shaft 432 and the flanges 433 in non-rotatable condition, the winding drum 434 is rotated in the direction of the arrow (2).

FIG. 44(b) illustrates the condition in which the winding drum 434 is rotatably mounted on the annular flanges 434 fixedly mounted on the stationary shaft 432, the flanges 434 having a radius r2. With this arrangement, if the illustrated portion of the curtain fabric 435 is pulled downwards in the direction of the arrow (3) while keeping the stationary shaft 432 and the flanges 434 in non-rotatable condition, the winding drum 434 is rotated in the direction of the arrow (4).

If r1=r2, then the portion of the curtain fabric 435 shown in FIG. 44(a) and the portion of the curtain fabric 435 shown in FIG. 44(b) move up and down at the same speed. Thus, the curtain fabric 435 can be neatly wound up on, or unwound from, the winding drum 434 without deformation.

Referring back to FIG. 42, there is shown an elongated cover 460 used for covering the winding drum 434 (FIG. 43). The cover 460 has a pair of holes 461, 461 formed in two opposed end walls (not designated) of the cover 460. The holes 461, 461 are fitted with a pair of lateral projections or bosses 462, 462 formed on the respective flanges 416, 417 of the guide rails 411, 412 so that the cover 460 is attached to the upper ends of the guide rails 411, 412.

FIG. 45 is a detailed cross-sectional view of the curtain assembly 410 according to the eighteenth embodiment. As shown in FIG. 45, the curtain assembly 410 further includes a coiled wind-up spring 437 disposed in an annular space defined between the winding drum 434 and the stationary shaft 432, and a lock mechanism 450 operable to lock the winding drum 434 in position against the winding force of the wind-up spring 437.

The stationary shaft 432 has left and right end portions 432a, 432b formed straight, and a central portion 432c extending between the end portions 432a, 432b. The central portion 432c is curved outwardly to meet the horizontal curvature of the inside surface of the rear window glass 402. The left and right end portions 432a, 432b of the stationary shaft 432 are snugly received in a pair of retaining holes 416a, 417a, respectively, formed in the flanges 416, 417 of the respective guide rails 411, 412 (FIG. 42). The end portions 432a, 432b thus received in the retaining holes 416a, 417a are firmly secured to the flanges 416, 417.

The annular flanges 433 are fixedly mounted at regular intervals on a portion of the stationary shaft 432 extending from the point A to the point B.

The winding drum 434 is a corrugated or bellows-like flexible tubular member molded of synthetic resin. The winding drum 434, as they are mounted on the annular flanges 433 on the stationary shaft 432, is curved to follow the curved configuration of the central portion 432c of the stationary shaft 432. The winding drum 434 has a pair of annular collars or sleeves 438, 439 firmly fitted in the opposite ends thereof. The sleeves 438, 439 are rotatably mounted on the end portions 432a, 432b of the stationary shaft 432 via a pair of bearings 440, 440. The winding drum 434 is curved outwardly, and so it is axially stretched on its exterior side and axially contracted at its interior side. Thus, the pitch of parallel ridges or grooves of the corrugated winding drum 434 is greater at the exterior side (P1) than at the interior side (P2).

The wind-up spring 437 is a torsion spring disposed between the right sleeve 439 and a stepped annular attachment flange 441. The wind-up spring 437 has a left end 437a firmly connected to a small-diameter portion 441a of the attachment flange 441, and a right end 437b firmly connected to a small-diameter portion 439a of the right sleeve 439. The attachment flange 441 is firmly secured to the stationary shaft 432.

When the curtain fabric 435 is pulled downwards, the wind-up spring 437 is twisted as the winding drum 434 rotates together with the right sleeve 434. When the curtain fabric 435 is freed from the downward pulling force, the twisted wind-up spring 437 is allowed to spring back and immediately restores its original shape. During that time, the right sleeve 439 is forced by the wind-up spring 437 to rotate in the winding direction, thereby winding up the curtain fabric 435 around the winding drum 434.

The lock mechanism 450 includes a gear 451 formed on an outside surface of the right sleeve 439, a lock pin 452 lockingly engageable with the gear 451, and a compression coil spring 453 for urging the lock pin 452 toward the gear 451.

The lock pin 452 extends through an opening or hole 417b formed in the flange 417. The lock pin 452 has an annular flange 456 located near the fore end, and an enlarged pull knob 457 formed on an end remote from the fore end.

The compression spring 453 is disposed between the flange 456 and a bent portion 417 of the flange 417. The fore end of the lock pin 452 is normally held in interlocking engagement with the gear 451 by the force of the compression spring 453.

Operation of the roll curtain assembly 410 will now be described with reference to FIGS. 44(a), 44(b) and 45.

At first, the pull knob 457 (FIG. 45) of the locking mechanism 450 is pulled interiorly of the vehicle to release the interlocking engagement between the lock pin 452 and the gear 451. Then, as shown in FIGS. 44(a) and 44(b), two laterally spaced portions of the curtain fabric 435 are pulled downwards in the directions of the arrows (1) and (3), respectively. During that time, since the stationary shaft 432 and the flanges 433 are kept non-rotatable, the winding drum 434 rotates in the direction indicated by the arrows (2) and (4), thereby allowing the curtain fabric 435 to be unwound from the winding drum 434.

The radius of the winding drum 434 is constant throughout the length of the winding drum 434 (i.e., rl=r2), and so the portion of the curtain fabric 435 shown in FIG. 44(a) and the portion of the curtain fabric 435 shown in FIG. 44(b) move downwards at the same speed. At this time, the right sleeve 439 shown in FIG. 45 rotates in the unwinding or releasing direction in unison with the winding drum 434 with the result that the right end 437b of the wind-up spring 437 is rotated in the releasing direction.

When the curtain fabric 435 is pulled down to a desired position, the pull knob 457 of the locking mechanism 450 is released whereupon the fore end of the lock pin 452 is urged against the gear 451 by the force of the compression spring 453. The lock pin 452 and the gear 451 are thus interlocked with each other. As a result, the right sleeve 439 and the winding drum 434 are locked in position against rotation and, hence, the curtain fabric 435 is held stationary at the desired position.

When the curtain fabric 435 is to be wound up, the pull knob 457 of the locking mechanism 450 shown in FIG. 45 is pulled again to release the lock pin 452 from interlocking engagement with the gear 451. The wind-up spring 437 which has been twisted in the releasing direction is now allowed to spring back to restore its original shape and configuration. This means that the right end 437b of the twisted wind-up spring 437 rotates in the wind-up direction, thereby rotating the right sleeve 439 and the winding drum 434 in the wind-up direction to wind up the curtain fabric 435 around the winding drum 434.

FIG. 46 is a perspective view showing a curtain assembly 470 according to a nineteenth embodiment of the present invention. In FIG. 46, those parts which are identical to those of the eighteenth embodiment shown in FIGS. 42 - 45 are designated by the same reference characters and a further description thereof can, therefore, be omitted.

The curtain assembly 470 is designed for use in combination with a window glass 476 extending to overlap the roof and a side panel of the vehicle (minivan, for example).

The curtain assembly 470 is a roll curtain assembly and includes a curtain fabric 471 having a pair of resin-coated side edge portions (front and rear edge portions) 471a, 471b formed by applying a molten resin to the material of the curtain fabric 471 to reinforce the edge portions of the curtain fabric 471. The resin-coated edge portions 471a, 471b of the curtain fabric 471 are received in and guided along the respective longitudinal guide grooves in front and rear channel-shaped guide rails 474, 475.

The window glass 476 is curved or bent at an angle of about 90 degrees at a vertical central portion thereof. The thus bent window glass 476 has a substantially horizontal upper portion attached to the roof of the vehicle, and a substantially vertical lower portion attached to the side panel of the vehicle.

The front and rear guide rails 474, 475 are curved or bent at their longitudinal central portion at an angle of about 90 degrees, so as to fit the curved configuration of the window glass 476.

The resin-coated edge portions 471a, 471b of the curtain fabric 471 may be replaced by a plurality of pins (not shown) attached at intervals to the opposite edge portions of the curtain fabric 471. The pins are slidably received in the guide grooves of the front and rear guide rails 474, 475.

FIGS. 47A and 47B are cross-sectional views taken along line C-C of FIG. 46, the views showing the operation of the roll curtain assembly 470.

The curtain fabric 471 shown in FIG. 47a is in its fully opened position in which a slider 436a attached to the lower end of the rear edge 471b of the curtain fabric 471 is disposed at an upper end of the rear guide rail 475.

FIG. 47B shows the curtain fabric 471 disposed in the fully closed position in which the slider 436a is located at the lower end of the rear guide rail 475. Since the resin-coated edge portions 471a, 471b of the curtain fabric 471 are received in the guide rails 474, 475, the curtain fabric 471 can be opened and closed along the inside surface of the window glass 476.

FIG. 48 is a side view showing a winding drum 480 according to a twentieth embodiment of the present invention. In FIG. 48, those parts which are identical to those of the eighteenth embodiment shown in FIGS. 42 - 45 are designated by the same reference characters and a further description thereof can, therefore, be omitted.

The winding drum 480 generally comprises a flexible tubular member or body 481 and a coiled spring member 482 wound around an inner cylindrical surface of the tubular body 481. The spring member 482 is attached by bonding to the inner cylindrical surface of the tubular body 481. The thus constructed winding drum 480 is able to provide the same advantageous effect as the winding drum 434 of the eighteenth embodiment.

FIG. 49A is a view showing a winding drum 490 according to a twenty-first embodiment of the present invention. FIG. 49B is a perspective view showing the structure of a cylindrical block used in the winding drum 490.

As shown in FIG. 49A, the winding drum 490 is composed of a plurality of cylindrical blocks 491 arranged in juxtaposition along a curved central portion of a stationary shaft 432, with projections 492a on one block 491 being held in mesh with grooves 492 in the adjacent block 491.

By virtue of the meshing engagement between the projections 492a and the recesses 492b, a rotational force on one block 491 is transmitted to the adjacent block 491. Thus, all of the cylindrical blocks 491 are rotatable in unison with each other to allow a curtain fabric to be unwound from the winding drum 490 or to wind up the curtain fabric around the winding drum 490 in the same manner as the winding drum 434 of the eighteenth embodiment.

As clearly shown in FIG. 49B, each individual cylindrical block 491 has, formed on its one end face, two diametrically opposed radial projections 492a, 492a and two diametrically opposed radial grooves 492b, 492b that are 90 degrees out of phase with the projections 492a, 49a. The other end face of the cylindrical block 49l also has two diametrically opposed radial projections 492a and two diametrically opposed radial grooves 492b that are 90 degrees out of phase with the projections 492a and grooves 492b on said one end face.

In the eighteenth embodiment described above, the left and right guide rails 411, 412 are attached to the inside surface of the rear window glass 402 by means of screw fasteners (bolts 414 and nuts 415). These guide rails 411, 412 may be attached by bonding to the window glass 402 in which instance the bonding power of an adhesive is increased by the masking film layer 406 as the outside surface of the masking film layer 406 is coarser than the inside surface of the window glass 402. Thus, the guide rails 411, 412 can be attached firmly to the window glass 402. The masking film layer 406 is able to protect the adhesive from deterioration by light.

The curtain unit according to the eighteenth embodiment has a wind-up spring 434 used for winding up the curtain fabric 435 around the winding drum 434. In place of the wind-up spring 434, a handle (not shown) connected to the winding drum 434 may be used. The handle is manually actuated to rotate the winding drum 434 to wind up the curtain fabric 435 around the winding drum 434. As an alternative, an electric motor (not shown) may be connected to the winding drum 434 to electrically open and close the curtain fabric 435.

The guide rails 411, 412 used in the eighteenth embodiment may be omitted in which instance the stationary shaft 432 is supported by a pair of support members (not shown) directly attached to the inside surface of the rear window glass 402, and one or more stoppers (not shown) are provided to hold the rod 436 in a predetermined position or positions. The support members may be the same in construction as the flanges 416, 417 provided on the upper ends of the guide rails 411, 412.

Obviously, various minor changes and modifications of the present invention are possible in the light of the above teaching. It is therefore to be understood that within the scope of the appended claims the invention may be practiced otherwise than as specifically described.

**Claims**

1. A curtain assembly for a vehicle window, comprising:

   a window glass (12) for the vehicle window, said window glass having an inside surface to face inside the vehicle;

at least one guide rail (15,16; 31; 42; 51,52; 61,63; 91,93) ; and

a curtain (20; 33; 65; 83; 95) capable of pulling open and closed along said at least one guide rail (15,16; 31; 42; 51,52; 61,63; 91,93) characterised in that said at least one guide rail is attached substantially directly to said inside surface of said window glass (12).

2. A curtain assembly according to claim 1, wherein said window glass (12) is curved.

3. A curtain assembly according to claim 1 or claim 2 , wherein said window glass (12) has a masking layer (13) applied to said inside surface over a region to which said guide rail (15,16; 31; 42; 51,52; 61,63; 91,93) is attached.

4. A curtain assembly according to any one of the preceding claims, wherein said curtain (20; 33; 65; 83;95) has an inside surface to face the interior of the vehicle window, said inside surface of said curtain (20; 33; 65; 83; 95) and said inside surface of said window glass (12) being spaced from each other by a distance which is in the range of 3 to 20 mm.

5. A curtain assembly according to claim 3 or claim 4 wherein said window glass (12) has a pair of spaced side edges and said masking layer (13) is applied to said inside surface along said side edges, said at least one guide rail (15,16; 31; 42; 51,52; 61,63; 91,93) being disposed one along each of said side edges and attached by an adhesive (28) to said inside surface of said window glass (12) with said masking layer (13) disposed between each said guide rail (15,16; 31; 42; 51,52; 61,63; 91,93) and said window glass (12).

6. A curtain assembly according to any one of the preceding claims wherein said curtain is an accordion curtain (33).

7. A curtain assembly according to any one of the preceding claims wherein said window glass is a roof window glass (3) having a pair of spaced side edges, each said guide rail (42) being disposed one along each of said side edges of said roof window glass (3) and bonded to said inside surface of said roof window glass (3).

8. A curtain assembly according to any one of the preceding claims wherein said guide rail (42) has a clamp (53) formed integrally therewith, said clamp (53) being fitted to an edge of said window glass (12).

9. A curtain assembly according to claim 1 wherein the window glass has an upper edge and a lower edge extending substantially parallel with each other;

said at least one guide rail comprises, an upper guide rail (61; 91) is disposed along said upper edge of said window glass (12) and, a lower guide rail (63; 93) disposed along said lower edge of said window glass (12); said curtain (65; 95) is capable of being pulled open and closed along said upper and lower guide rails (61, 63; 93, 95); and

at least one pair of rollers (72, 73; 102) assembled to support said curtain (65; 95) to roll along said upper guide rail (61; 91), one (72; 102) of said pair of rollers (72, 73; 102) being disposed exterior of said curtain (65; 95), the other (73) of said pair of rollers (72, 73; 102) being disposed interior of said curtain (65; 95).

10. A curtain assembly according to claim 9, wherein said lower guide rail (63; 93) is smaller in size than said upper guide rail (61; 91), and said one roller (102) has a width smaller than the width of said other roller (73).

11. A curtain assembly for a vehicle window according to claim 1 wherein said at least one guide rail comprises a pair of parallel spaced guide rails (211, 212);
each of said guide rails (211, 212) being composed of:

a first guide rail member (214) having a first end, a second end remote from said first end, and further having a first attachment seat (216) disposed on said first end and firmly connected to said inside surface of said window glass (12); and
a second guide rail member (215) having a first end received in said second end of said first guide rail member (214) and movable relatively to said second end in a longitudinal direction of said second guide rail member (214), said second guide rail member (215) further having a second end remote from said first end of said second guide member (215), and a second attachment seat (217) disposed on said second end of said second guide rail member (215) and firmly connected to said inside surface of said window glass (12).

12. A curtain assembly according to claim 11, further including a guide member (220) structured to hold said first and second guide rail members (214, 215) in longitudinally aligned condition while keeping a predetermined amount of space between said first guide rail member (214) and said second guide rail member (215), one (214) of said first and second guide rail members (214, 215) being firmly connected to said guide member (220), the other guide rail member (215) being supported by said guide member (220) and movable relatively to said guide member (220) in a longitudinal direction of said second guide rail member (215).

13. A curtain assembly according to claim 1 wherein said at least one guide rail comprises a pair of parallel spaced guide rails (211, 212) each of said guide rails (211, 212) having one end fixedly connected to said inside surface of said window glass (12), the other end of each said guide rail (211, 212) being slidably connected to said inside surface of said window glass (12).

14. A curtain assembly according to claim 13, wherein said one end of each said guide rail (211, 212) has a first attachment seat (263) firmly connected by a threaded fastener (218, 219) to said inside surface of said window glass (12), and said other end of said guide rail (211, 212) has a second attachment seat (263) slidably connected by a second threaded fastener (2185, 219) to said inside surface of said window glass (12), said second attachment seat (264) having an elongated hole (264a) extending parallel to a longitudinal axis of each said guide rail (211, 212) and loosely receiving therein said second threaded fastener (218).

15. A curtain assembly for a vehicle window according to claim 1 wherein said at least one guide rail comprises a pair of parallel spaced guide rails (281, 282) each having a first attachment portion located at a first given position on each said guide rail (281) and a second attachment portion located at a second given position on each said guide rail (281, 282), said first attachment portion being firmly secured to said inside surface of said window glass (12), said second attachment portion being bonded to said inside surface of said window glass (12) via an elastic member (285).

16. A curtain assembly according to claim 15, wherein said window glass (12) has a masking layer (13) applied to said inside surface along an outer peripheral portion of said window glass (12), said elastic member (285) being attached to said masking layer (13).

17. A curtain assembly for a vehicle window according to claim 1 wherein said at least one guide rail comprises a pair of parallel spaced guide rails (281, 282) each of said guide rails (281, 282) having a first attachment portion located at a first given position on each said guide rail (281) and a second attachment portion located at a second given position on each said guide rail (281), said first attachment portion being fixedly secured to said inside surface of said window glass (12), said second attachment portion being attached to said inside surface of said window glass (12) via a resilient member (291).

18. A curtain assembly according to claim 1, wherein said at least one guide rail comprises a pair of parallel spaced guide rails (281, 282) each of said guide rails (281, 282) having a first attachment portion located at a first given position on each said guide rail (281) and a second attachment portion located at a second given position on each said guide rail (281), said first attachment portion being firmly secured to said inside surface of said window glass (12), said second attachment portion being slidably connected to said inside surface of said window glass (12) via a stopper (292; 293) attached to said inside surface of said window glass (12).

19. A curtain assembly according to claim, 18, wherein said second attachment portion of each of said guide rails (281, 282) is an axial lug (294) disposed on at least one end of said guide rail (281, 282), said axial lug (294) being slidably supported by said stopper (293).

20. A curtain assembly according to claim 1 wherein said at least one guide rail comprises a pair of parallel spaced guide rails (301) each of said guide rails (301) having a surface facing said inside surface of said window glass (12) and bonded over the entire area thereof to said inside surface of said window glass (12) with an elastic member (302) disposed therebetween.

21. A curtain assembly according to claim 20, wherein said window glass (12) has a masking layer (13) applied to said inside surface along an outer peripheral portion (12b) of said window glass (12), said elastic member (302) being attached to said masking layer (13).

22. A curtain assembly according to claim 1 wherein said at least one guide rail comprises a pair of parallel spaced guide rails (211, 212) attached substantially directly to said inside surface of said window glass (12);

said curtain (20) extending between said guide rails (211, 212);

a winding shaft (318) on which said curtain (20) is wound, said winding shaft (318) being disposed adjacent to one end of said guide rails (211, 212) and extending perpendicularly to said guide rails (211, 212); and

an elongate cover member (311) for covering said winding shaft (318), said elongate cover member (311) having one end firmly connected to one of said guide rails (211, 212), the other end of said elongate cover member (311) being slidably connected to a portion of said winding shaft (318).

23. A curtain assembly according to claim 1 wherein said at least one guide rail comprises a pair of parallel spaced guide rails (211, 212), said curtain (20) extending between said guide rails (211, 212), a winding shaft on which said curtain (20) is wound, said winding shaft being disposed adjacent to one end of said guide rails (211, 212) and extending perpendicularly to said guide rails (211, 212); and

an elongate cover member (331) for covering said winding shaft, said elongate cover member (331) having one end firmly connected to one (212) of said guide rails (211, 212), the other end of said elongate cover members (311) being slidably connected to the other guide rail (211).

24. A curtain assembly according to claim 23, wherein said other end of said elongate cover member (331) has an elongate hole (338) extending in the longitudinal direction of said elongate cover member (331), said other end of said elongate cover member (331) being connected to said other guide rail (211) by a threaded fastener (334) loosely received in said elongate hole (338) so that said cover member (331) is movable relative to said other guide rail (211) within the length of said elongate hole (338).

25. A curtain assembly according to claim 1: wherein said at least one guide rail comprises a pair of parallel spaced guide rails (211, 212) a curtain (20) extending between said guide rails (211, 212) a winding shaft on which said curtain (20) is wound, said winding shaft being disposed adjacent to one end of said guide rails (211, 212) and extending perpendicularly to said guide rails (211, 212); and

an elongate cover member (341) for covering said winding shaft, said elongate cover member (341) having an end bonded to a corresponding one of said guide rails (211, 212) via an elastic member (342).

26. A curtain unit for use with a curved window glass (402; 476) of a vehicle window, said curtain unit comprising:

a curved stationary shaft (432) arranged along an inside surface of the curved window glass (402; 476);

a flexible tubular winding drum (434; 480; 490) rotatably mounted on said stationary shaft (432); and

a curtain fabric (435) connected at one end to said winding drum (434; 480; 490) so that it is wound on or released from said winding drum (434; 480; 490) in response to rotation of said winding drum (434; 480; 490).

27. A curtain unit according to claim 26, wherein said stationary shaft (432) has a plurality of annular flanges (433) fixedly mounted thereon and spaced at regular intervals in the longitudinal direction of said stationary shaft (432), said winding drum (434) being rotatably mounted on said annular flanges (433).

28. A curtain unit according to claim 26, wherein said curtain fabric (435) has a pair of resin-coated side edge portions (471a, 471b).

29. A curtain unit according to any of claims 26 to 28, wherein said winding drum (480) is comprised of a flexible tubular body (481), and a coiled spring member (482) attached to an inner cylindrical surface of said tubular body (481).

30. A curtain unit according to claim 26, wherein said winding drum (490) is comprised of a plurality of cylindrical blocks (491) rotatably mounted on said stationary shaft (432), each of said cylindrical blocks (491) having a radial projection (492a) and a radial groove (492b) angularly spaced from each other and held in mesh with the radial groove (492b) and the radial projection (492a), respectively, of the adjacent cylindrical block (491).

31. A curtain unit according to any one of claims 26 to 29 for use with a curved window glass (402; 476) having a curvature in a horizontal cross section, wherein said curved stationary shaft (432) is disposed horizontally along an upper edge of the curved window glass (402; 476).

32. A curtain unit according to any one of claims 26 to 31, wherein the curved window glass (402; 476) has a masking layer (406) applied to the inside surface over an area to which said stationary shaft (432) is attached.

FIG.1

FIG.2

# FIG.3

12
20
15
20b
26
26
22
25
15a

# FIG.4

21
20
REAR
FRONT
25
25
16
15
12

FIG.5

# FIG.6

(a)

(b)

(c)

FIG.7

2

11

30

12

34

33a

31a

31

33

33b

26

26

22

25

11

FIG.8

40

3

FRONT

TOP

44

REAR

42

# FIG.9

EXTERIOR

INTERIOR

REAR

FRONT

FIG.10

EXTERIOR

INTERIOR

XI

# FIG.11

FIG.12

# FIG.13

(a)

(b)

FIG.14

# FIG.15

FIG. 16

# FIG.17

REAR

FRONT

EP 0 834 414 A2

FIG.18

EP 0 834 414 A2

# FIG.19A

# FIG.19B

FIG.20

**FIG.21**

**FIG.22**

FIG.23

FIG.24

# FIG.25

# FIG.26

FIG.27A

12b

13

285

286

281

12

286

282

285

13

12b

FIG.27B

218

284

219

281

12

218

282

219

284

FIG.28A

12

REAR

285

286

281

FIG.28B

12

286

285

281

δ

FIG.29

FIG.30

**FIG.31**

(a)

(b)

**FIG.32**

**FIG.33**

FIG.34

# FIG.35

REAR

FRONT

218
12
218
12b
13
12a
311
214a
310

12a
216
230
214a
230
219
214
230a
211
220
214
315

218
218
230
219
214b
215a
215
317
220
219
212
215
25
217
215
20
22
12a
215b
219
113
25

EP 0 834 414 A2

**FIG.36B**

310

318
318a
211
FRONT
211
230
230b

**FIG.36A**

310
230b
318a
B
312
211
313 315 311
316 318
319
321
320
314
322
316
317
12
REAR
212
20

53

# FIG. 37

# FIG.38

FIG.38

EP 0 834 414 A2

FIG.39

EP 0 834 414 A2

# FIG.40A

# FIG.40B

FIG.41

EP 0 834 414 A2

# FIG.42

EP 0 834 414 A2

FIG.43

FIG.44

(a)          (b)

## FIG.45

# FIG.46
## FIG.

EP 0 834 414 A2

# FIG.47A

470    436

436a    471

475

# FIG.47B

470

475

(5)

476

471

471b

436a

**FIG.48**

**FIG.49A**

**FIG.49B**

# FIG.50

*(RELATED ART)*